# EUROPEAN PATENT APPLICATION

(11) **EP 1 420 551 A2**
(43) Date of publication of application: **19.05.2004**
(21) Application number: 03025447.8
(22) Date of filing: 05.11.2003
(51) Int. Cl.: H04L 12/28

(54) **Method for transmitting and receiving control messages in a mobile communication system providing MBMS service**

(30) Priority: 06.11.2002 KR 2002068596; 11.11.2002 KR 2002069831
(71) Applicant: SAMSUNG ELECTRONICS CO. LTD., Suwon-city, Kyounggi-do 441-742 (KR)
(72) Inventor: Choi, Sung-Ho, Samsung Electronics Co.,Ltd., Suwon-city Kyungki-do (KR); Kim, Soeng-Hun, Samsung Electronics Co.,Ltd., Suwon-city Kyungki-do (KR)
(74) Representative: Grünecker, Kinkeldey, Stockmair & Schwanhäusser Anwaltssozietät

(57) **Abstract**

A communication system providing a multimedia broadcast/multicast service (MBMS). Control message to be transmitted to user equipments (UEs) desiring to receive the MBMS service, paging message including information indicating an operation of transmitting a response to the paging message received, is transmitted to the UEs, and thereafter, the control information corresponding to the paging information is transmitted, thereby minimizing interference and use of uplink resource.

## Description

### BACKGROUND OF THE INVENTION

### 1. Field of the Invention

The present invention relates generally to a mobile communication system, and in particular, to a method for exchanging control messages between a radio network controller (RNC) and a user equipment (UE) in a mobile communication system providing a multimedia broadcast/multicast service (MBMS).

### 2. Description of the Related Art

Recently, because of the development of communication industry, a service provided in a code division multiple access (CDMA) mobile communication system is developing into a multicasting multimedia communication system for transmitting voice service data and also high-capacity data such as packet data and circuit data. Therefore, in order to support the multicasting multimedia communication system, active research is being conducted on a broadcast/multicast service in which a service is provided from one data source to a plurality of user equipments (UEs). The broadcast/multicast service can be classified into a cell broadcast service (CBS), which is a message-centered service, and a multimedia broadcast/multicast service (MBMS) for supporting multimedia data such as real-time image and voice, still image, and text.

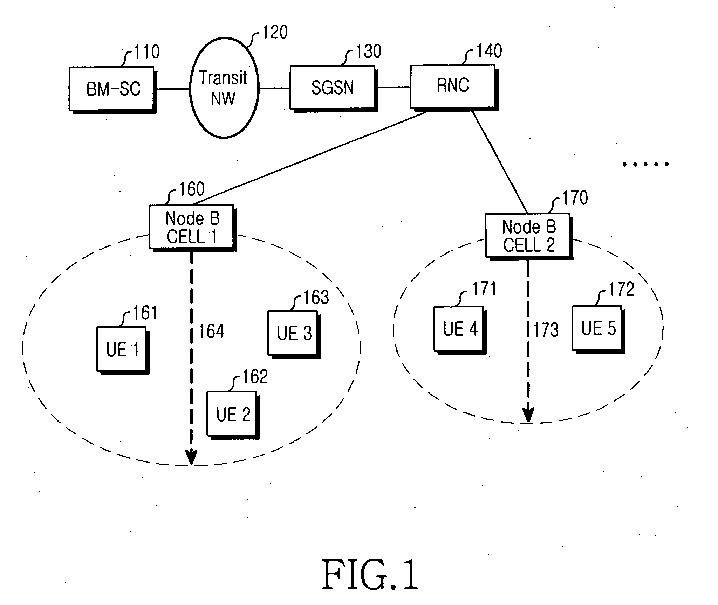

FIG 1 schematically illustrates a network configuration for providing an MBMS service in a mobile communication system. Referring to FIG. 1, a broadcast/multicast-service center (BM-SC) 110 provides an MBMS stream for an MBMS service, schedules the stream, and delivers the scheduled MBMS stream to a transit network (N/W) 120. The transit network 120 is a network existing between the BM-SC 110 and a serving GPRS (General Packet Radio Service) support node (SGSN) 130, and delivers a stream for an MBMS service provided from the BM-SC 110 to the SGSN 130. It is assumed herein that the SGSN 130 can be comprised of a gateway GPRS support node (GGSN) and an external network, and there exist a plurality of UEs requesting the MBMS service at a particular time, e.g., a UE1 161, a UE2 162, and a UE3 163 each belonging to a Node B1 or cell#1 160, and a UE4 171 and a UE5 172 each belonging to a Node B2 or cell#2 170.

The SGSN 130, receiving a stream for an MBMS service from the transit network 120, controls an MBMS-related service of subscribers, or UEs, desiring to receive an MBMS service, i.e., controls an MBMS-related service including, for example, managing MBMS service accounting-related data of respective subscribers and selectively transmitting MBMS service data to a particular radio network controller (RNC) 140. For the convenience of explanation, the term ''Node B" and the term "cell" will be used herein with the same meaning. In addition, the Node B can manage either one cell or a plurality of cells.

In order to selectively transmit MBMS data to a corresponding cell via the RNC 140, the SGSN 130 must have a list of RNCs receiving the MBMS service, and the RNC 140 must also have a list of cells receiving the MBMS service. The RNC 140, having the list of cells receiving the MBMS service, provides an MBMS service to the cells. The RNC 140 controls a plurality of cells, and transmits MBMS service data to a cell in which a UE requesting the MBMS service is located, among the cells managed by the RNC 140 itself. In addition, the RNC 140 controls a radio channel set up to provide the MBMS service, and manages the MBMS service-related information with the stream for the MBMS service delivered from the SGSN 130.

As illustrated in FIG 1, in order to provide an MBMS service, only one radio channel is set up between one Node B, e.g., the cell#2 170, and UEs 171 and 172 belonging to the cell#2 170. Though not illustrated in FIG. 1, a home location register (HLR) is connected to the SGSN 130; and performs subscriber authentication for an MBMS service.

Referring to FIG. 1, the MBMS stream is delivered to corresponding UEs via the transmit network 120, the SGSN 130, the RNC 140, and the Node B1 160 or the Node B2 170. That is, the MBMS stream is finally delivered to the UE1 161, the UE2 162 and the UE3 163 belonging to the Node B1 160 and the UE4 171 and the UE5 172 belonging to the Node B2 170. In addition, though not illustrated in FIG 1, a plurality of SGSNs can exist for a particular MBMS service "X", and also, a plurality of RNCs can exist for each of the SGSNs. The SGSN stores a list of RNCs transmitting a corresponding MBMS stream, and the RNC stores a list of cells, or Node Bs, transmitting the corresponding MBMS stream. As a result, the MBMS stream is delivered only to the Node Bs existing in the stored lists, enabling it to be transmitted to corresponding UEs in the Node Bs.

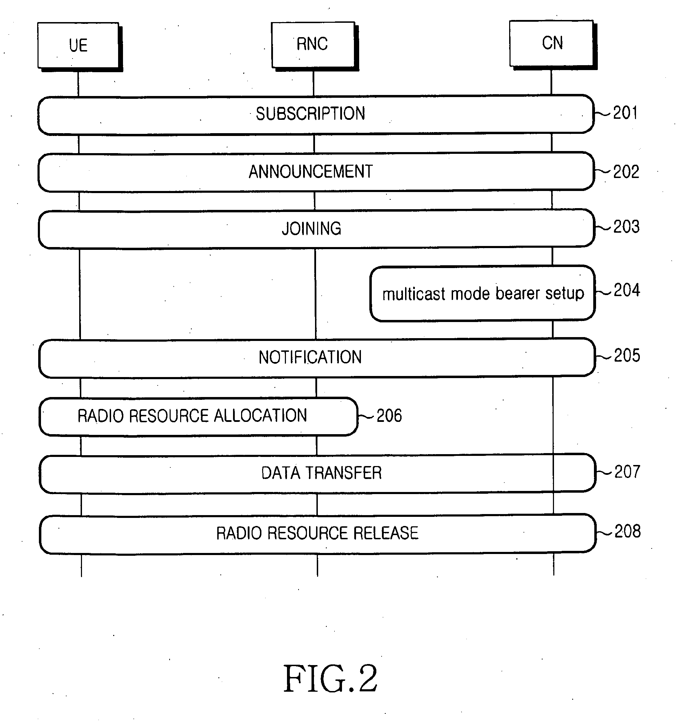

FIG 2 illustrates a signaling procedure for providing an MBMS service in a mobile communication system. Referring to FIG. 2, a UE performs user subscription to a core network (CN) in order to receive a particular MBMS service (Step 201). The core network includes a BM-SC, a transit network, and an SGSN, as illustrated in FIG 1. In the user subscription process, fundamental information related to MBMS service accounting or MBMS service reception is exchanged between a service provider and a user. When the user subscription is completed, the core network performs a service announcement process in order to announce fundamental information on currently available MBMS services, e.g., menu information, to UEs or MBMS service subscribers (Step 202). The "menu information" refers to time information at which a particular MBMS service is initiated, and duration information. The core network can either broadcast the menu information to predetermined service areas through a broadcast service such as CBS, or transmit the menu information only to the UEs from which an MBMS service request was received. In addition, the core network provides an MBMS service ID (Identifier) for distinguishing MBMS services through the menu information.

Upon receiving menu information through the service announcement process, the UE selects a desired MBMS service from the menu information, and performs a service joining process on the selected MBMS service to the core network (Step 203). The service joining request message transmitted from the UE to the core network includes an MBMS service ID indicating the selected MBMS service, and a UE ID indicating the corresponding UE. In response to the service joining request from the UE, the core network identifies the MBMS service desired by the UE, and sets up a multicast mode bearer to the UE (Step 204). In the multicast mode bearer setup process, a transport bearer for providing the MBMS service onto the core network, i.e., the SGSN and the transit network, can be previously set up. For example, a GTP-U/UDP/IP/L2/L1 bearer (see 3GPP TS 23.060) for the MBMS service may be previously set up between the SGSN and the GGSN.

Thereafter, the core network performs a service notification process of notifying the UE that the requested MBMS service will be provided soon (Step 205). For the service notification process, a paging method applied in a general CDMA communication system or a new paging method optimized for the MBMS service can be used.

After being notified through the service notification process that the requested MBMS service will be initiated soon, the UE performs a radio resource allocation process together with the core network (Step 206). The UE actually assigns a radio resource to provide the MBMS service through the radio resource allocation process, and performs a radio bearer (RB) setup process and a radio channel reconfiguration process based on the assigned radio resource-related information. More specifically describing step 206, the radio resource allocation process is divided into a radio bearer setup step in which the RNC provides UEs located in a particular cell with information on a radio bearer over which the MBMS service will be transmitted in the corresponding cell, and a radio link setup step in which the RNC provides information on a transport bearer and a radio bearer to be formed on a Iub interface, to the cells where UEs scheduled to receive the MBMS service are located. When the radio resource allocation process is ended, all UEs desiring to receive a particular MBMS service detect information related to a radio link through which the particular MBMS service will be provided, and information on an upper layer where the service will be handled, and the cells to which the UEs belong complete setting up of the radio link and the Iub interface. That is, when the radio resource allocation process of step 206 is performed, preparation for transmitting the MBMS service data to the UEs is completed.

When the radio resource allocation process is completed, all UEs desiring to receive particular MBMS service data detect information on a radio link over which the particular MBMS service is to be provided, and information on an upper layer where the MBMS service will be processed. Further, cells to which the UEs belong complete setting up of the radio link and the Iub interface. When preparation for providing the MBMS service between the RNC and the UEs is completed, the core network performs an MBMS data transfer process in which MBMS service data is transmitted to the UEs via the RNC (Step 207). Further, in step 207, a ciphering key update process can be performed. For example, when there is a necessity to update a ciphering key for a particular MBMS service, the RNC provides the new ciphering key to all UEs receiving the MBMS service. Thereafter, when transmission of the MBMS service data is completed, a radio resource release process for releasing radio resources, i.e., a transport bearer and a radio bearer, set up between the UE and the core network is performed (Step 208).

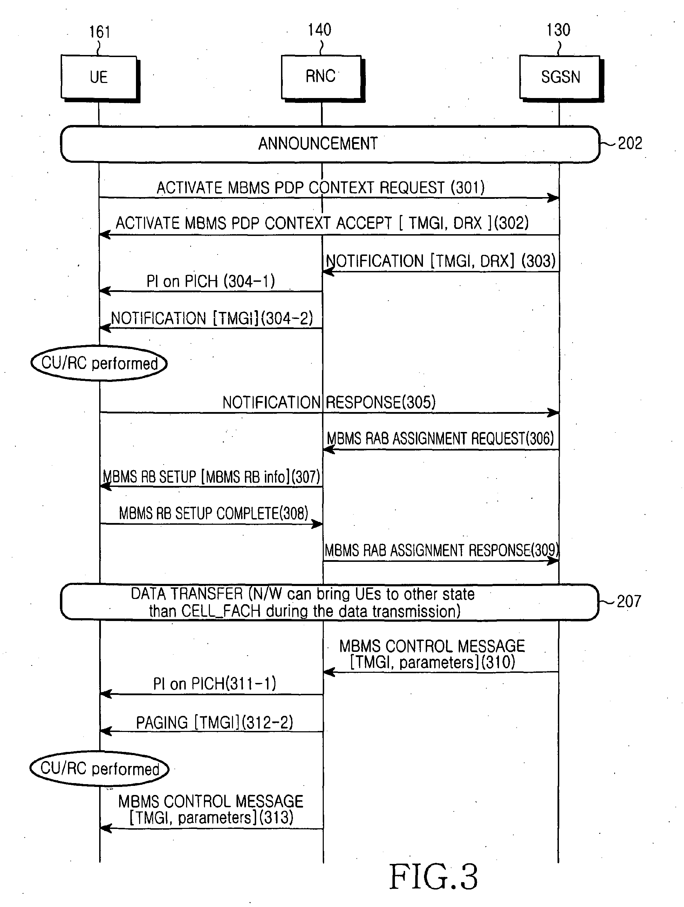

FIG 3 illustrates the MBMS service providing procedure illustrated in FIG. 2 in more detail. The CN illustrated in FIG 2 includes the SGSN 130, the transit network 120, and the BM-SC 110. In FIG 3, however, in order to place priority to an operation of a radio access network (RAN), the CN will be described laying stress on a concept of the SGSN 130.

Referring to FIG. 3, fundamental information on currently available MBMS services, e.g., menu information, is provided to a UE 161 through the service announcement process described in conjunction with FIG. 2 (Step 202). The UE 161 transmits an Activate MBMS PDP (Packet Data Protocol) Context Request message to the SGSN 130 (Step 301). The PDP context is classified into a primary PDP context and a secondary PDP context. The secondary PDP context has the same information as that of the primary PDP context. That is; the secondary PDP context is a context that exists only when the primary PDP context exists, and the secondary PDP context reuses the intact information of the primary PDP context. The primary PDP context and the secondary PDP context are identical to each other in information used, but different from each other in a GPRS tunneling protocol (GTP) over which actual packet data is transmitted. The GPRS is a packet data service performed in a universal mobile telecommunications system (UMTS) network. In addition, parameters contained in the Activate MBMS PDP Context Request message include Network Layer Service Access Point Identifier (NSAPI), Temporary Identifier (TI), PDP Type, PDP Address, Access Point Network, Quality of Service (QoS). A GTP tunnel is generated in the mobile communication system, when the UE 161 sends a request to an SGSN 130 included in a core network (UE-initiated activation) and when an external network sends a request to the core network (network-requested activation). Upon receiving the Activate MBMS PDP Context Request message, the SGSN 130 generates an MBMS PDP context for a corresponding MBMS service when the UE 161 that transmitted the Activate MBMS PDP Context Request message is a first UE that requested the corresponding MBMS service.

After storing information on the UE 161 in the generated MBMS PDP context, the SGSN 130 performs a series of operations together with a GGSN connected to the SGSN 130. Here, the operations performed by the SGSN 130 along with the GGSN are GTP tunnel setup operations, and if the SGSN 130 notifies parameters included in the Activate MBMS PDP Context Request message received from the UE 161 to the GGSN, then the GGSN sets up a GTP tunnel using the parameters. Because the GTP tunnel setup process is not directly related to the present invention, a detailed description thereof will be omitted. The MBMS PDP context is a set of parameters where information related to a particular MBMS service is stored, and the MBMS PDP context stores (i) a list of UEs that transmitted the Activate MBMS PDP Context Request message, (ii) position information of the UEs, and (iii) information related to a transport bearer for transmitting the corresponding MBMS service data. The SGSN 130 transmits an Activate MBMS PDP Context Accept message to the UE 161 (Step 302). The Activate MBMS PDP Context Accept message includes a temporary multicast group identity (TMGI) parameter to be used in group paging for the MBMS service, and a discontinuous reception (DRX) parameter. The DRX parameter is a parameter related to a period for which the UE 161 monitors a signal on a paging indicator channel (PICH), and the DRX parameter includes a DRX cycle length (CL) coefficient and Np. The Np has a value selected from [18,36,72,144], and is given as system information (SI). The Np indicates how many paging instances (PIs) exist in the one system frame. The paging-related TMGI and DRX parameters are disclosed in Korean Patent Application No. 2002-34704 corresponding US Patent Application No. 465,321 (June 18, 2003) filed by the applicant, the contents of which are incorporated herein by reference.

Upon receiving the Activate MBMS PDP Context Accept message from the SGSN 130, the UE 161 transitions to an idle state for waiting. At a corresponding MBMS service start time or after receiving first MBMS service data, the SGSN 130 transmits a service Notification message to an RNC 140 having UEs desiring to receive the service, i.e., the UE 161 that transmitted the Activate MBMS PDP Context Request message (Step 303). Because the SGSN 130 has a list of the UEs that requested the corresponding MBMS service and a list of RNCs to which the UEs belong, it transmits a service Notification message to the RNCs to which the corresponding UEs belong, when the MBMS service is started. The service Notification process is also disclosed in Korean Patent Application No. 2002-34704.

The SGSN 130 transmits the TMGI and DRX parameters to the RNC 140 along with a service Notification message indicating initiation of the MBMS service. Upon receiving the service Notification message from the SGSN 130, the RNC 140 calculates a paging occasion (PO) and a paging instance (PI) using the TMGI and DRX parameters included in the received service Notification message. The UE 161 also calculates PO and PI using the TMGI and DRX parameters included in the Activate MBMS PDP Context Accept message. The RNC 140 turns on or off a paging indicator channel (PICH) at a time indicated by the PI and PO, to indicate whether the UE 161 will receive a signal transmitted, over a paging channel (PCH) (Step 304-1). When the PICH is turned on at PI of a corresponding PO, the UE 161 receives the PCH signal and recognizes paging of the UE 161 itself. However, when the PICH is turned off, the UE 161 does not receive the PCH signal. When the UE 161 is paged, the RNC 140 transmits the service Notification message or a paging message over PCH associated with the PICH, i.e., associated PCH, after a lapse of time predetermined with the PICH, to enable the UE 161 to recognize that the corresponding MBMS service will be started soon (Step 304-2). The RNC 140 instructs UEs requesting the MBMS service to receive an MBMS RB Setup message over a common control channel (e.g., forward access channel (FACH)) at an early time.

The UE 161 periodically monitors a PICH signal at the calculated PI of the PO. If it is determined that the PICH signal has a paging for a corresponding MBMS service, the UE 161 receives an MBMS Paging message on an associated PCH. However, if it is determined that the PICH signal does not have a paging for the corresponding MBMS service, the UE 161 does not receive the associated PCH signal. "The PICH signal has a paging for a corresponding MBMS service" means that information '1' is coded to the PICH at the PI of the PO, while "the PICH signal does not have a paging for the corresponding MBMS service" means that information '0' is coded to the PICH at the PI of the PO.

Upon receiving the MBMS Paging message, the UE 161 determines which MBMS service will be initiated, using TMGI included in the received MBMS Paging message. If the TMGI indicates an MBMS service requested by the UE 161 itself, the UE 161 recognizes that the MBMS service requested by the UE 161 itself will be started. That is, by receiving the MBMS Paging message, the UE 161 is notified of the MBMS service. Herein, an MBMS Paging message is received as one of the methods for perceiving notification of an MBMS service.

Upon receiving the MBMS Paging message, the UE 161 transmits a service Notification Response message indicating normal receipt of the service Notification message, to the SGSN 130 (Step 305). After receiving the service Notification Response message, the SGSN 130 transmits an MBMS RAB (Radio Access Bearer) Assignment Request message to the RNC 140 (Step 306). The MBMS RAB Assignment Request message can include information on QoS (Quality of Service) necessary for providing the MBMS service and a list of UEs to which MBMS RAB is set up.

The above description has been made with reference to only the UE 161. However, when a plurality of UEs request the corresponding MBMS service, the SGSN 130 transmits a list of the UEs to the RNC 140 along with the MBMS RAB Assignment Request message, and the RNC 140 performs operations following reception of the corresponding MBMS service for each of the UEs. The RAB is a set of transmission resources formed in a radio access network (RAN) to provide a particular MBMS service, and specifically, the RAB includes a transport bearer between the SGSN 130 and the RNC 140 (Iu interface), and a transport bearer and a radio channel between the RNC 140 and a Node B 160 (Iub interface).

The RNC 140 determines MBMS RB information for the corresponding MBMS service according to the MBMS RAB Assignment Request message received from the SGSN 130. The MBMS RB information includes Layer 2 (L2) information and Layer 1 (L1) information. The L2 information can include radio link control (RLC)/packet data convergence protocol (PDCP)-related information, and the L1 information can include transport format set (TFS) information, transport format combination set (TFCS) information, channelization code information, and transmit power-related information. The RNC 140 determines a cell for setting up an MBMS RAB, using the UE list, and because the RNC 140 detects positions of UEs in a CELL_FACH state by the cell, the UE list can be substituted for a cell list. Therefore, the RNC 140 transmits an MBMS RB Setup message, which will be described later, to each cell, and repeatedly transmits the MBMS RB Setup message as many times as the number of cells where UEs are located.

The RNC 140, after determining the MBMS RB information, transmits an MBMS RB Setup message to the UE 161 (Step 307). The UE 161 sets up an MBMS radio bearer corresponding to MBMS RB information included in the received MBMS RB Setup message, and then transmits an MBMS RB Setup Complete message to the RNC 140 (Step 308). Upon receiving the MBMS RB Setup Complete message from the UE 161, the RNC 140 transmits an MBMS RAB Assignment Response message to the SGSN 130 (Step 309). The SGSN 130 then starts data transmission for the corresponding MBMS service (Step 207).

Thereafter, if the SGSN 130 transmits an MBMS Control message to the RNC 140, then the RNC 140 turns on or off PICH at a time indicated by the PI and PO to indicate whether the UE 161 will receive a PCH signal or not, as described in step 304-1 (Step 311-1). The MBMS Control message also includes such parameters as TMGI. Thereafter, when there is a paging for the UE 161, the RNC 140 transmits a Paging message to the UE 161 over PCH associated with the PICH, i.e., an associated PCH, after a lapse of a time predetermined with the PICH, to enable the UE 161 to recognize that the corresponding MBMS service will be initiated soon (Step 312-2). In addition, the RNC 140 transmits such parameters as the TMGI to the UE 161 along with the MBMS Control message (Step 313).

Of the messages described in conjunction with FIG. 3, the service Notification message, the MBMS RB Setup message, and the MBMS Control message constitute a group message. The "group message" is a message made in such a manner that a plurality of UEs receive one message. That is, a plurality of UEs determine in step 304-1 whether the PICH, i.e., the service Notification message, was received by consulting the same PI in the PO, and the TMGI described in step 304-2 represents UEs scheduled to receive the service Notification message, so that a plurality of UEs receive one service Notification message. In addition, the MBMS RB Setup message described in step 307 and the MBMS Control message described in step 313 are also transmitted over FACH, which is a common channel, and parameters such as TMGI are inserted therein, thereby enabling a plurality of UEs receive the parameters in common.

States of the UE will now be described herein below. The states of the UE are roughly divided into CELL_DCH, CELL_FACH, CELL_PCH, URA_PCH, and IDLE states, and a description of each state will be made herein below.
(1) CELL_DCH: in this state, a dedicated channel is set up between a UE and an RNC, and data exchange between the UE and the RNC is performed through a dedicated channel. The RNC tracks a position of the UE by the cell. In transmitting data from the RNC to the UE or from the UE to the RNC, no separate previous procedure is required, and data exchange is achieved through a dedicated channel.
(2) CELL_FACH: in this sate, FACH is set up between a UE and an RNC. When there is data to transmit to the RNC, the UE transmits the data using a reverse access channel (RACH), and the UE receives data from the RNC over FACH. The UE and the RNC exchange data over common channels of FACH and RACH, and the RNC tracks a position of the UE by the cell. In transmitting data from the RNC to the UE or from the UE to the RNC, no separate previous procedure is required. In the CELL_FACH state, the UE receives every data transmitted over FACH, and determines whether the received data is its own data, using an identifier (ID) in the received data.
(3) CELL_PCH: In the CELL_PCHstate, a UE monitors a PICH signal, and does not receive other channel signals such as an FACH signal. An RNC, before transmitting data to the UE, must page the UE and bring the UE to the CELL_FACH state. Similarly, the UE, before transmitting data to the RNC, must transition to the CELL_FACH. The RNC tracks a position of the UE by the cell. In the paging procedure, the DRX parameter determined in the RNC is used.
(4) URA_PCH: this state is identical to the CELL_PCH state except that an RNC tracks a position of a UE by the URA (UTRAN Registration Area).
(5) IDLE: in this state, an RNC has no information on a position of a UE, and can page the UE at a request of a core network. The paging procedure is identical to the paging procedure in the CELL_PCH state except that the DRX parameter determined in the core network is used. In order for the RNC and the UE to transmit and receive data, an RRC (Radio Resource Control) Connection Setup process must proceed.

As stated above, when there is a paging from the core network, UEs in the CELL_PCH state and the URA_PCH state perform a Cell Update process, and UEs in the IDLE state perform an RRC Connection Setup process. The Cell Update process and the RRC Connection Setup process will now be described herein below.

### Cell Update Process

Through the Cell Update process, a UE is assigned a UE ID, called a C (cell)-radio network temporary identity (C-RNTI), by an RNC. The C-RNTI identifies UE-related data received over FACH. For example, if the RNC desires to transmit a particular message to a particular UE in the CELL_FACH state, the RNC inserts the C-RNTI into a medium access control (MAC) header of the message and transmits the message to the UE over FACH. Then the UE, receiving an FACH signal in the CELL_FACH state, analyzes a MAC header in the messages transmitted over the FACH, and receives only the message having C-RNTI identical to its own unique C-RNTI. In addition, when transmitting a message to the RNC over RACH, the UE inserts its own C-RNTI into a MAC header, and the RNC identifies the UE that transmitted the message, using the C-RNTI.

### RRC Connection Setup Process

Through the RRC Connection Setup process, a UE is assigned C-RNTI and a UE ID, called a U (UTRAN)-RNTI, by an RNC. The U-RNTI is also an identifier for identifying the UE, and is assigned when the C-RNTI cannot be used. Because the C-RNTI is uniquely assigned to each cell, when the UE changes its cell, the RNC must newly assign the C-RNTI to the corresponding UE. Therefore, when the UE changes its cell, the cell change is notified to the RNC using U-RNTI. In addition, through the RRC Connection Setup process, the RNC and the UE previously make a mutual agreement on a format of control messages to be exchanged later by the RNC and the UE. The control message is transmitted through a signaling radio bearer (SRB) between the RNC and the UE, and the RNC and UE previously make a mutual agreement on a format of the SRBs through the RRC Connection Setup process. There can be provided a plurality of SRBs, and each of the SRBs is assigned a unique integer. Therefore, the SRBs are identified using unique integers assigned thereto. For example, when 4 SRBs are formed between the UE and the RNC, the SRBs are called a radio bearer #1 (RB1), a radio bearer #2 (RB2), a radio bearer #3 (RB3), and a radio bearer #4 (RB4). In addition, a format of the SRBs can include L2/L1 information to be used for each SRB, for example, RLC information and transport format set information. A message format determining a format of the SRBs between the UE and the RNC is predetermined system information and notified to all UEs, and an SRB called a radio bearer #0 (RB0) is used. As a result, UEs in the CELL_PCH, URA_PCH, CELL_FACH, and CELL_DCH states have already formed the SRBs to the RNC, and exchange of control messages between the UEs and the RNC is performed using the formed SRBs.

After the Cell Update process or the RRC Connection Setup process, the UE and the RNC, or the CRNC, can transmit and receive a dedicated message. The dedicated message has an opposite concept of the group message, and means a message for which a transmission side is matched to a reception side on a one-to-one basis. The C-RNTI serves as an identifier for identifying a corresponding UE. In addition, the dedicated message is transmitted through one of a plurality of SRBs formed between the UE and the RNC. If a radio bearer #0 (RB0), or SRB, is used instead of the C-RNTI in a group message transmission/reception process, it is unnecessary to separately perform the Cell Update process or the RRC Connection Setup process.

The UE states will now be described with reference to FIG. 3. Herein, the case where UEs in the IDLE or CELL_PCH and URA_PCH states need to perform the Cell Update process or the RRC Connection Setup process is referred to as "CU/RC performed." As illustrated in FIG 3, it is noted that the Cell Update process or the RRC Connection Setup process must be frequently performed. That is, upon receiving a Paging message for a particular MBMS service, the UEs in the IDLE or CELL_PACH and URA_PCH states perform the Cell Update process or the RRC Connection Setup process. Of course, if the Paging message is for delivering a group message and the UE need not transmit a response message for the group message to an RNC, then the Cell Update process or the RRC Connection Setup process may not be required. For example, when receiving MBMS data over a common channel in the CELL_PCH or URA_PCH state, or receiving an MBMS Paging message to receive a control message in other cases and receiving an MBMS Control information over FACH through an MBMS-related control message, the UE is not necessarily required to perform the Cell Update process in the CELL_PACH state.

According to the UMTS standard, UEs receiving a paging message should perform the Cell Update process or the RRC Connection Setup process in order to transmit a response message to the paging message. Therefore, a UE receiving the paging message must perform the Cell Update process or the RRC Connection Setup process. However, transmission of a response message to the paging message decreases efficiency of uplink transmission resources and increases uplink interference caused by the response message. In addition, because performing the Cell Update process or the RRC Connection Setup process on the paging message by the UE may generate an unnecessary load, there is a demand for a new response scheme for receiving the paging message.

### SUMMARY OF THE INVENTION

It is, therefore, an object of the present invention to provide a method for transmitting and receiving a control message in a mobile communication system supporting an MBMS service.

It is another object of the present invention to provide a method for minimizing state transition of a UE during transmission/reception of a control message in a mobile communication system supporting an MBMS service.

It is further another object of the present invention to provide a method for minimizing transmission of a response by a UE during transmission/reception of a control message in a mobile communication system supporting an MBMS service.

To achieve the above and other objects, there is provided a method for transmitting control information for a multimedia broadcast/multicast service (MBMS) by a radio network controller (RNC) in a mobile communication system including a user equipment (UE) and the RNC providing the MBMS to the UE. If a control message for an MBMS to be transmitted to the UE is generated, the RNC generates the UE's operation instruction information indicating whether to respond to received paging message; and transmits the paging message including the operation instruction information to the UE before transmission of the control message.

To achieve the above and other objects, there is provided a method of receiving control information for a multimedia broadcast/multicast service (MBMS) by a user equipment (UE) in a mobile communication system including the UE and a radio network controller (RNC) providing the MBMS to the UE. The UE determines whether to respond to a paging message by using operation instruction information instructing whether to respond to the paging message; and transmits response message to the RNC according to the operation instruction information included in the paging message.

### BRIEF DESCRIPTION OF THE DRAWINGS

The above and other objects, features, and advantages of the present invention will become more apparent from the following detailed description when taken in conjunction with the accompanying drawings in which:
FIG 1 is a diagram schematically illustrating a network configuration for providing an MBMS service in a mobile communication system;
FIG 2 is a signaling diagram illustrating a procedure for providing an MBMS service in a mobile communication system;
FIG 3 is a signaling diagram illustrating the MBMS service providing procedure of FIG 2 in detail;
FIG 4 is a signaling diagram illustrating an MBMS Control message transmission/reception procedure between a UE and an RNC according to a first embodiment of the present invention;
FIG 5 is a flowchart illustrating a procedure for receiving an MBMS Control message by a UE in the IDLE, CELL_PCH, or URA_PCH state in FIG 4;
FIG 6 is a flowchart illustrating a process of receiving an MBMS Control message by a UE in a CELL_FACH state in FIG 4;
FIG 7 is a flowchart illustrating a process of receiving an MBMS Control message by a UE in a CELL_DCH state in FIG. 4;
FIG 8 is a flowchart illustrating a process of transmitting an MBMS Control message by an RNC in FIG 4;
FIG 9 is a signaling diagram illustrating a process of transmitting and receiving an MBMS control message between a UE and an RNC according to a second embodiment of the present invention;
FIG 10 is a flowchart illustrating a process of receiving an MBMS Control message by a UE in an IDLE, CELL_PCH or URA_PCH state;
FIG 11 is a flowchart illustrating a process of transmitting an MBMS Control message by an RNC in FIG. 9;
FIG 12 is signaling diagram illustrating a service Notification process and an MBMS RB Setup process when a UE X and a UE Y are in the same cell, according to the present invention;
FIG 13 is a signaling diagram illustrating a process of updating a ciphering key when a UE X and a UE Y are in the same cell, according to an embodiment of the present invention;
FIG 14 is a signaling diagram illustrating a process of releasing an MBMS RB when a UE X and a UE Y are in the same cell, according to the present invention; and
FIG 15 is a flowchart illustrating a process of transmitting an MBMS Control message by an RNC according to a third embodiment of the present invention.

### DETAILED DESCRIPTION OF THE PREFERRED EMBODIMENT

Several preferred embodiments of the present invention will now be described in detail herein below with reference to the annexed drawings. In the following description, a detailed description of known functions and configurations incorporated herein has been omitted for conciseness.

The present invention provides an efficient group signaling scheme, i.e., a downlink control message transmission scheme in which one control message is delivered to a plurality of user equipments (UEs). When there is a necessity to transmit an MBMS Control message, if the MBMS Control message is a group message, a radio network controller (RNC) performs an operation proposed by the invention together with a UE. The "MBMS Control message" refers to control messages transmitted and received in connection with the MBMS service, and the "group message" refers to a message made in such a way that a plurality of UEs receive one message.

An RNC notifies UEs in an IDLE state and CELL_PCH/URA_PCH states of initiation of the MBMS service through an MBMS Paging message. Upon detecting initiation of the MBMS service through the MBMS paging procedure, the UEs receive a signal on a common control channel such as a forward access channel (FACH). The UEs, detecting initiation of the MBMS service, perform a Cell Update process or an RRC Connection Setup process according to a CU/RC (Cell Update/RRC Connection) required parameter included in the MBMS Paging message. The present invention prevents UEs in the IDLE/CELL_PCH/URA_PCH states from performing unnecessary Cell Update or RRC Connection Setup process, to thereby reduce interference or load due to unnecessary message transmission.

The RNC transmits the MBMS Control message over such a common control channel such as FACH. The RNC may repeatedly transmit the MBMS Control message as many times as a predetermined number so that it can be reliably delivered to all UEs. In some cases, the UE may fail to receive the MBMS Control message transmitted by the RNC. Upon failure to normally receive the MBMS Control message transmitted by the RNC, the UE can send a retransmission request for the MBMS Control message to the RNC at a time when a time to request (TTR) included in the MBMS Paging message elapses.

Through the above-stated processes, the RNC and UE are prevented from performing an unnecessary message transmission/reception process (e.g., message transmission/reception occurring in the Cell Update process and a Cell Update Conform process). In addition, when there is no necessity to transmit a response message to an MBMS Control message, the MBMS Control message is repeatedly transmitted as many times as a predetermined number so that the MBMS Control message is reliably delivered to all UEs.

The MBMS Control message includes a value tag indicating that the currently-transmitted MBMS Control message is a message that was repeated a predetermined number of times, so as to prevent the UE from responding to the same MBMS Control message. In addition, although the same MBMS Control message was repeatedly transmitted as many times as the predetermined number, if the UE fails to receive the MBMS Control message, an associated message ID (AMID) is included in the MBMS Control message to enable the UE to request retransmission of the MBMS Control message. The AMID is a kind of a retransmission request identifier. At times, the AMID may not be included in the MBMS Control message. That is, when the UE fails to receive the MBMS Control message after the TTR, the UE can transmit only its own ID and service ID information, and the RNC can retransmit the failed MBMS Control message to the reception-failed UE.

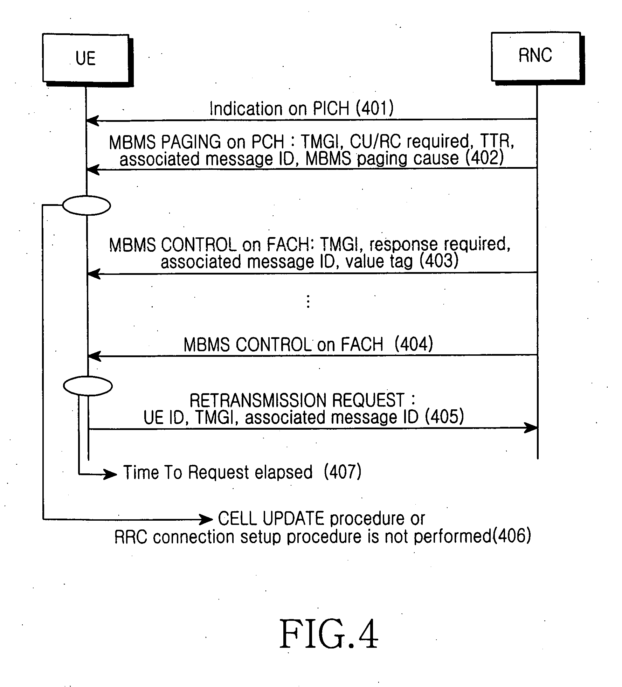

FIG 4 is a signaling diagram illustrating an MBMS Control message transmission/reception procedure between a UE and an RNC according to a first embodiment of the present invention. Before a description of FIG 4, it should be noted that a network configuration for providing the MBMS service is identical to the network configuration illustrated in FIG 1. Because the MBMS Control message is a group message, it must be transmitted to all UEs receiving the same MBMS service. However, in FIG 4, the MBMS Control message is transmitted to only one UE, for simplicity.

### 1. MBMS Paging Message Transmission/Reception Process

If there is a necessity to transmit an MBMS Control message to UEs while an RNC is providing an MBMS service, the RNC performs transmission of an MBMS Paging message to transmit the MBMS Control message to all UEs receiving the MBMS service. Because the MBMS Control message is a group message, all UEs receiving the same MBMS service must receive the MBMS Control message regardless of their states. The UEs have any one of IDLE, CELL_DCH, CELL_FACH, CELL_PCH, and URA_PCH states.

In order to transmit the MBMS Control message to a UE, the RNC first transmits an MBMS Paging message to the UE, and a corresponding operation performed by the UE and the RNC will be described below.

The RNC first calculates a paging occasion (PO) and a paging instance (PI) using a temporary multicast group identity (TMGI) of the MBMS service. The TMGI is an identifier that is uniquely assigned according to a type of the MBMS service, and in calculating the PO and PI, not only the TMGI but also a discontinuous reception (DRX) parameter are considered. Then, the RNC transmits information indicating paging for the MBMS service along with a paging channel (PICH) signal at a time corresponding to the calculated PO and PI (Step 401), to inform the UE that an MBMS Paging message will be transmitted over PCH. Thereafter, the RNC transmits an MBMS Paging message to the UE over the PCH, a predetermined time after the PICH signal is transmitted (Step 402). The MBMS Paging message includes such parameters as TMGI, CU/RC required, TTR, AMID, and MBMS paging cause.

The parameters included in the MBMS Paging message will now be described below.

### (1) TMGI

TMGI is an identifier for identifying a particular MBMS service, and in an MBMS Joining process, UEs detect TMGI for the particular MBMS service. In addition, the UE that requested a particular MBMS service may use TMGI as an identifier for identifying paging for the MBMS service requested by the UE itself.

### (2) CU/RC required

The CU/RC required is a parameter indicating whether the Cell Update process or the RRC Connection Setup process is required to be performed on an MBMS Paging message including the CU/RC required. The RNC determines a value to be set to the CU/RC required parameter according to characteristics of a corresponding MBMS Paging message and an MBMS Control message associated with the MBMS Paging message. For example, if the MBMS Control message associated with the MBMS Paging message is a message that does not require a response from a reception side, i.e., UEs, then the CU/RC required is set to "off," i.e., "not required." In contrast, if the MBMS Control message is a message that requires a response from the UEs, the CU/RC required is set to "on," i.e., "required." In the following description, it will be assumed that the CU/RC required parameter is set to "on" when it is necessary to perform the Cell Update process or the RRC Connection Setup process, and the CU/RC required parameter is set to "off" when it is not required to perform the Cell Update process or the RRC Connection Setup process. Thus, when the CU/RC required is set to "on," corresponding UEs perform the Cell Update process or the RRC Connection Setup process according to their current states. In this way, based on the CU/RC required field in the MBMS Paging message, the RNC can control operation of the UEs according to whether the Cell Update process or the RRC Connection Setup process is actually required. By using the CU/RC required field, the UEs can optionally perform or not perform the Cell Update process or the RCC Connection Setup process according to their states. According to the present invention, the UE can receive a Paging message in the CELL_PACH state or the URA_PCH state before a Control message is received. Therefore, the Paging message functions not only as a Notification message for notifying initiation of an MBMS service but also as a Notification message for notifying reception of a Control message.

### (3) AMID

The AMID is a parameter for identifying an MBMS Control message associated with an MBMS Paging message. For example, when AMID in the MBMS Paging message is assigned "1," AMID in an MBMS Control message associated with the MBMS Paging message is also assigned "1." In the future, the AMID will be used as an identifier for requesting retransmission of the MBMS Paging message and the MBMS Control message.

### (4) TTR

The TTR represents a waiting time for which a UE must wait to request retransmission of the MBMS Control message when the UE has received an MBMS Paging message but has failed to receive an MBMS Control message having the same AMID as an MBMS Control message associated with the MBMS Paging message.

### (5) MBMS paging cause

The MBMS paging cause is a parameter indicting a cause of transmitting an MBMS Paging message, and in a wideband-code division multiple access (W-CDMA) mobile communication system, a paging cause applicable to the MBMS service can include a 'Terminating streaming call'. Of course, a new paging cause instead of the existing paging cause can be defined for the MBMS service. That is, a new paging cause value for notification of an MBMS service can be defined, or meaning of an existing paging cause value can be extended to be used as a value for MBMS paging.

If a UE in the IDLE, CELL_DCH, CELL_FACH, CELL_PCH, or URA_PCH state detects paging for the MBMS service from a received PICH signal, the UE receives an MBMS Paging message over PCH at a predetermined time. The UE analyzes TMGI included in the received MBMS Paging message, and if the analyzed TMGI is identical to TMGI that the UE recognized, the UE can optionally perform or not perform the Cell Update/RRC Connection Setup process according to information on a CU/RC required field in the MBMS Paging message. More specifically, when a CU/RC required field in the MBMS Paging message is set to "on," the UE performs the Cell Update process or the RRC Connection Setup process (Step 406).

### 2. MBMS Control Message Transmission/Reception Process

When the MBMS Paging process is ended, the RNC transmits an MBMS Control message to the UE over a common control channel, e.g., FACH (Step 403). The MBMS Control message includes message type, TMGI, response required, AMID, and value tag parameters, and the parameters included in the MBMS Control message will now be described below.

### (1) message type

Message type is a parameter indicating a message type of the MBMS Control message, and the message type will be described. For example, if the message type is set to "0," the MBMS Control message represents an MBMS RB (Radio Bearer) Setup message, and if the message type is set to "1," the MBMS Control message represents an MBMS RB Reconfiguration message. In addition, if the message type is set to "2," the MBMS Control message represents an MBMS Ciphering Key Update message, and if the message type is set to "3," the MBMS Control message represents an MBMS RB Release message.

### (2) TMGI

As described above, TMGI is an identifier for identifying a particular MBMS service.

### (3) response required

Response required is a parameter indicating whether UEs that received the MBMS Control message must transmit a response message for the received MBMS Control message to the RNC. Generally, the response required is set together with the CU/RC required. For example, if the CU/RC required is set to "off," the response required of an MBMS Control message associated with the corresponding MBMS Paging message is also set to "off," and if the CU/RC required is set to "on," the response required of an MBMS Control message associated with the corresponding MBMS Paging message is also set to "on." If the response required is set to "off," it means that the UE need not transmit a response message to the received MBMS Control message, and if the response required is set to "on," it means that the UE must transmit a response message to the received MBMS Control message.

### (4) AMID

AMID is set to the same value as that of AMID assigned to the MBMS Paging message.

### (5) value tag

When the MBMS control message is repeatedly transmitted a predetermined number of times, the same MBMS Control messages transmitted the predetermined number of times are assigned the same value tag. Therefore, a UE receiving two or more same MBMS Control messages can prevent a previously transmitted MBMS Control message from being retransmitted, using the value tag included in the received MBMS Control message.

Though not illustrated in FIG 4, the MBMS Control message may include a control parameter, and the control parameter has parameters to be applied to an object the MBMS Control message desires to control. For example, when the MBMS Control message represents an MBMS RB Reconfiguration message, L2 information and L1 information of a radio bearer to be reconfigured are included in the control parameters.

The RNC repeatedly transmits an MBMS Control message to the UE over FACH (Step 404). Although the MBMS Control message was transmitted as many times as the predetermined number of times, if the UE fails to receive the MBMS Control message even at a time when the TTR elapses (Step 407), the UE transmits a Retransmission Request message to the RNC (Step 405). The Retransmission Request message is a message for requesting retransmission of a reception-failed MBMS Control message when the UE fails to receive the MBMS Control message although the UE has received an MBMS Paging message associated with the MBMS Control message from the RNC. Therefore, when the MBMS Control message is normally received after the MBMS Paging message was received, the Retransmission Request message transmission process is not required. The Retransmission Request message includes UE ID, TMGI, and AMID, and the UE requests retransmission of the MBMS Control message using the AMID. The RNC retransmits an MBMS Control message having a corresponding AMID to the UE, using AMID included in the Retransmission Request message.

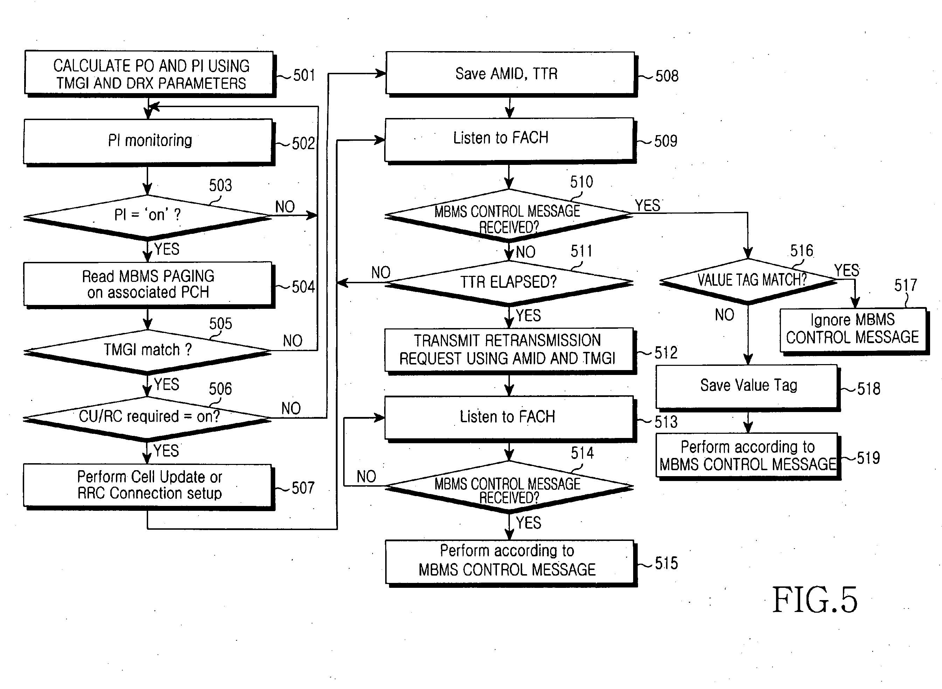

The process of transmitting and receiving the MBMS Paging message and the MBMS Control message, performed by the UE and the RNC as described in FIG. 4, will now be described with reference to FIGS. 5 to 8.

FIG 5 is a flowchart illustrating an operation of receiving an MBMS Control message by a UE in the IDLE, CELL_PCH, or URA_PCH state in FIG 4. Referring to FIG 5, in step 501, when a UE in the IDLE, CELL_PACH or URA_PCH state detects TMGI and DRX parameters through a service Joining process, and the UE calculates PO and PI using the detected TMGI and DRX parameters. In step 502, the UE monitors the PICH signal according to the calculated PO. In step 503, the UE determines whether the monitored PICH signal has a paging instance (PI) indicating paging for an MBMS service. If it is determined that there is no PI indicating paging for the MBMS service, the UE returns to step 502. However, if there is PI indicating paging for the MBMS service, the UE proceeds to step 504. In step 504, the UE receives an MBMS Paging message by receiving a PCH signal corresponding to the PICH signal being monitored. In step 505, the UE determines whether TMGI included in the received MBMS Paging message is identical to the TMGI detected by the UE in the service Joining process. If it is determined that TMGI included in the MBMS Paging message is not identical to the TMGI detected by the UE, the UE returns to step 502. That is, because the PICH signal has PI indicating paging for an MBMS service but it is not initiation information of an MBMS service requested by the UE, the UE returns back to the step of monitoring the PICH signal. However, if the TMGI included in the MBMS Paging message is identical the TMGI detected by the UE, the UE proceeds to step 506. This indicates that the UE recognizes initiation of an MBMS service requested by the UE itself. In step 506, the UE determines whether a CU/RC required parameter included in the MBMS Paging message is turned "on." If the CU/RC required parameter is turned "on," the UE proceeds to step 507. However, if the CU/RC required parameter is not turned "on," the UE proceeds to step 508. This will be determined by various considerations such as a current state of the UE and a reception condition of MBMS service data, and the UE performs an operation according to a set value of the CU/RC required parameter.

In step 507, the UE performs the Cell Update process or the RRC Connection Setup process according to the current state of the UE as the CU/RC required parameter is turned "on," and then proceeds to step 509. However, in step 508, the UE buffers AMID and TTR included in the MBMS Paging message, and then proceeds to step 509. In step 509, the UE monitors FACH. In step 510, the UE determines whether an MBMS Control message is received over the monitored FACH. If the MBMS Control message is not received over the FACH, the UE proceeds to step 511. In step 511, the UE determines whether TTR has elapsed, as the MBMS Control message is not received. If the TTR has not elapsed, the UE returns to step 509 to continuously wait for the MBMS Control message to be received over the FACH. However, if it is determined in step 511 that the TTR has elapsed, the UE proceeds to step 512. In step 512, the UE transmits AMID and TMGI included in the received MBMS Paging message to an RNC along with a Retransmission Request message.

In step 513, the UE monitors an FACH signal to wait for an MBMS Control message corresponding to the Retransmission Request message. In step 514, the UE determines whether an MBMS Control message is received, based on the FACH monitoring result. If the MBMS Control message is not received over the FACH, the UE returns to step 513 to continuously monitor the FACH. However, if the MBMS Control message is received over the FACH, the UE proceeds to step 515. In step 515, the UE performs an operation corresponding to the received MBMS Control message, and then ends the procedure.

If it is determined in step 510 that an MBMS Control message is received over the FACH, the UE proceeds to step 516. In step 516, the UE determines whether a value tag of the currently received MBMS Control message is identical to a value tag of the previously received MBMS Control message. If a value tag of the currently received MBMS Control message is identical to a value tag of the previously received MBMS Control message, the UE proceeds to step 517. In step 517, the UE ignores the currently received MBMS Control message because the currently received MBMS Control message is retransmission of the previously received MBMS Control message. However, if it is determined in step 516 that a value tag of the currently received MBMS Control message is not identical to a value tag of the previously received MBMS Control message, the UE proceeds to step 518. In step 518, the UE buffers the value tag of the currently received MBMS Control message, and then proceeds to step 519. In step 519, the UE performs an operation corresponding to the received MBMS Control message, and then ends the procedure.

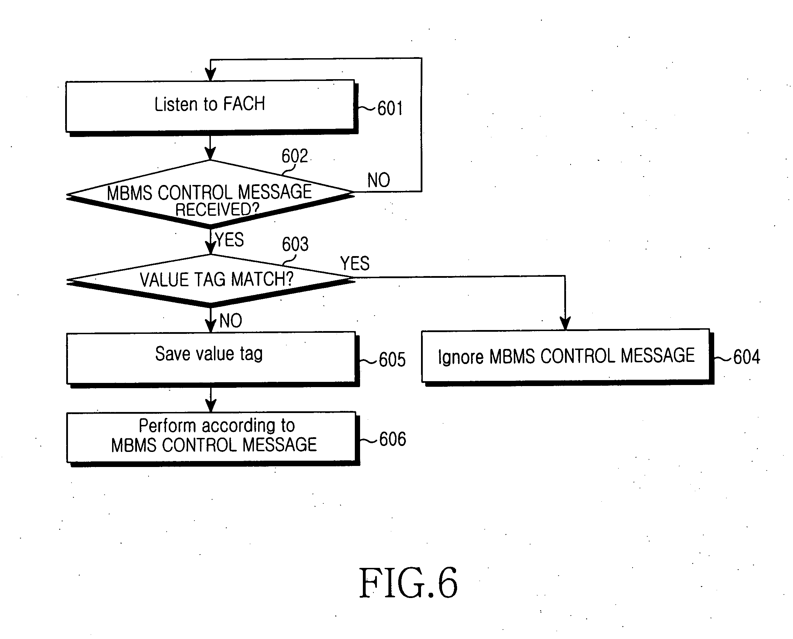

FIG 6 is a flowchart illustrating a process of receiving an MBMS Control message by a UE in a CELL_FACH state in FIG 4. Referring to FIG 6, in step 601, the UE monitors an FACH signal and then proceeds to step 602, because it is in a CELL_FACH state. In step 602, the UE determines whether an MBMS Control message is received over the monitored FACH. If an MBMS Control message is not received over the FACH, the UE returns to step 601 to continuously wait for the MBMS Control message. However, if an MBMS Control message is received over the FACH, the UE proceeds to step 603. In step 603, the UE determines whether a value tag of the currently received MBMS Control message is identical to a value tag of the previously received MBMS Control message. If a value tag of the currently received MBMS Control message is identical to a value tag of the previously received MBMS Control message, the UE proceeds to step 604. In step 604, the UE ignores the currently received MBMS Control message because the currently received MBMS Control message is retransmission of the previously received MBMS Control message. However, if it is determined in step 603 that a value tag of the currently received MBMS Control message is not identical to a value tag of the previously received MBMS Control message, the UE proceeds to step 605. In step 605, the UE buffers the value tag of the currently received MBMS Control message. In step 606, the UE performs an operation corresponding to the received MBMS Control message, and then ends the procedure.

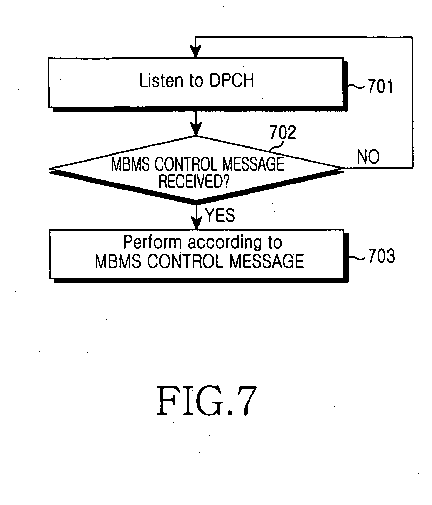

FIG 7 is a flowchart illustrating a process of receiving an MBMS Control message by a UE in a CELL_DCH state in FIG. 4. Referring to FIG 7, in step 701, the UE monitors a DCH signal and then proceeds to step 702, because it is in a CELL_DCH state. In step 702, the UE determines whether an MBMS Control message is received over the monitored DCH. If an MBMS Control message is not received over the DCH, the UE returns to step 701 to continuously wait for the MBSMS Control message. However, if an MBMS Control message is received over the DCH, the UE proceeds to step 703. In step 703, the UE performs an operation corresponding to the received MBMS Control message, and then ends the procedure. The reason that retransmission of an MBMS Control message using a value tag is not considered in FIG 7 is because a UE in the CELL_DCH state receives the MBMS Control message over DCH having high reliability, and can receive an MBMS Control message even through a retransmission process by a radio link control (RLC) layer when an error has occurred despite the high reliability of the DCH.

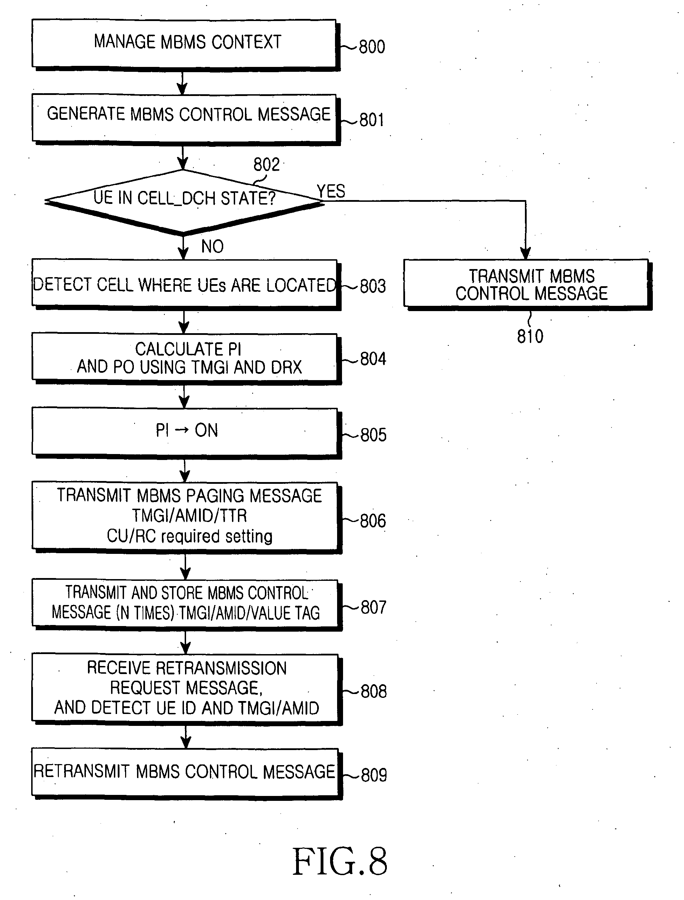

FIG 8 is a flowchart illustrating a process of transmitting an MBMS Control message by an RNC in FIG 4. Referring to FIG. 8, in step 800, the RNC manages an MBMS context for a particular MBMS service provided in an area managed by the RNC itself. The MBMS context includes the following information.
(1) TMGI
(2) DRX parameter
(3) UE list in CELL_DCH state
   This is a list of UEs that will receive an MBMS service or are currently receiving the MBMS service in the CELL_DCH state, and DCH-related information.
(4) UE list in CELL_FACH state
   This is a list of UEs that will receive an MBMS service or are currently receiving the MBMS service in the CELL_FACH state, and a list of cells where the UEs are located.
(5) UE list in CELL_PCH state
   This is a list of UEs that will receive an MBMS service or are currently receiving the MBMS service in the CELL_PCH state, and a list of cells where the UEs are located.
(6) UE list in URA_PCH state
   This is a list of UEs that will receive an MBMS service or are currently receiving the MBMS service in the URA_PCH state, and a list of cells where the UEs are located.
(7) L1 information of each cell
   This includes L1 information such as a channelization code and max power.

Although the MBMS context can include other information in addition to the above information, information having no effect on the invention will be omitted for simplicity.

The various UE lists are updated using mobility-related messages that the UEs transmit while moving between cells. For example, UEs in the CELL_PCH state transmits a Cell Update message to the RNC as they change their cells, and the RNC recognizes that a cell to which the UEs belong is changed, using the Cell Update message. The UE transmits the Cell Update message in the following cases.
(1) A UE in the CELL_PCH state moves from the current cell to another cell.
(2) A UE in the CELL_PCH or URA_PCH state receives a Paging message.
(3) Cell synchronization is lost in a physical channel.

The proposed CU/RC required parameter in the MBMS Paging message is used only for the second case where the UE is in the CELL_PCH or URA_PCH state, among the above cases in which the Cell Update message is transmitted.

If an MBMS Control message to be transmitted to UEs receiving a particular MBMS service is generated in step 801 while the RNC manages the MBMS context, then the RNC proceeds to step 802. An MBMS Control message for the MBMS service is generated, when the RNC itself needs to modify parameters related to the MBMS service or when a core network (CN) requests modification of MBMS service-related parameters. The RNC itself needs to modify parameters related to the MBMS service when an MBMS RB Reconfiguration message must be transmitted in order to modify MBMS RB information of a particular cell, and the CN requests modification of the MBMS service-related parameters when the CN notifies an end of the MBMS service.

In step 802, the RNC must transmit the MBMS Control message to UEs managed in the MBMS context, and must analyze a state of UEs managed in the MBMS context in order to transmit the MBMS Control message. That is, because a series of processes, e.g., paging processes, for transmitting the MBMS Control message according to a state of the UEs are different, a state of the UEs managed in the MBMS context must be analyzed. In step 802, the RNC analyzes a state of the UEs managed in the MBMS context to determine whether a corresponding UE is in a CELL_DCH state. If it is determined that the corresponding UE is not in the CELL_DCH state, the RNC proceeds to step 803. In step 803, the RNC detects a cell where the UEs are located. Because processes of steps 803 to 809 are separately performed for each cell where the UEs are located, the process of step 804 and its succeeding steps will be described with reference to a particular one cell, by way of example.

After detecting a cell where the UEs are located in step 803, the RNC calculates PO and PI using TMGI and DRX parameters stored in the MBMS context in step 804. In step 805, the RNC transmits a PICH signal by turning on PI at corresponding PO. In step 806, the RNC transmits an MBMS Paging message over PICH, a predetermined time after the PICH signal is transmitted. The MBMS Paging message, as mentioned above, includes such parameters as TMGI, AMID, TTR and CU/RC required. In step 807, the RNC repeatedly transmits an MBMS Control message associated with the MBMS Paging message over the PCH a predetermined number N of times, stores the repeatedly transmitted MBMS Control messages. A value tag is added to each of the repeatedly transmitted MBMS control messages to prevent a UE from repeatedly transmitting the same MBMS Control message several times. In step 808, the RNC repeatedly transmits the MBMS Control message N times, and thereafter, receives a Retransmission Request message from a UE. The RNC detects UE ID and AMID from the received Retransmission Request message, and the reason is to retransmit an MBMS Control message corresponding to the Retransmission Request message to the UE.

In step 809, the UE retransmits a corresponding MBMS Control message using the UE ID and AMID included in the Retransmission Request message, and then ends the procedure. Here, retransmitting the MBMS Control message using UE ID and AMID is retransmitting a dedicated message, and retransmitting the MBMS Control message using only the AMID is retransmitting a group message. The dedicated message retransmission or the group message retransmission can be varied according to system characteristics. If it is determined in step 802 that the UE is in the CELL_DCH state, the RNC proceeds to step 810 because a separate paging process is not required. In step 810, the RNC transmits an MBMS Control message to the UE, and then ends the procedure. The reason that the RNC does not repeatedly transmit the MBMS Control message to the UE is because there is very low error probability due to the high reliability of the DCH, and even though an error occurs, the MBMS Control message can be retransmitted through RLC retransmission.

A process of transmitting and receiving the MBMS control message according to a first embodiment of the present invention has been described so far with reference to FIGs. 4 to 8. Next, a process of transmitting and receiving an MBMS Control message according to a second embodiment of the present invention will be described.

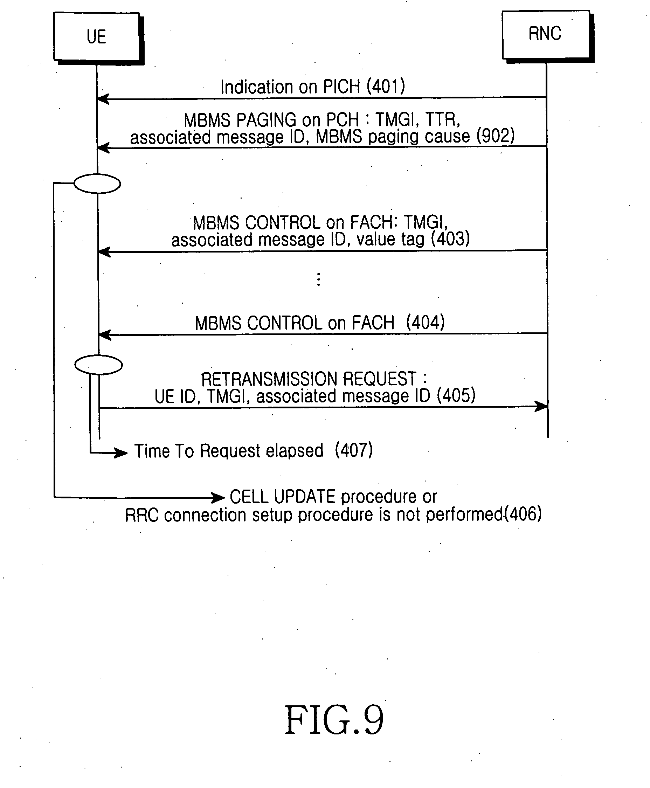

FIG 9 is a signaling diagram illustrating a process of transmitting and receiving an MBMS control message between a UE and an RNC according to a second embodiment of the present invention. Before a description of FIG 9, it should be noted that unlike the first embodiment, the second embodiment does not use the CU/RC required parameter. FIG 9 is identical to FIG 4 in operation of steps 401 and 403 to 407, except that the CU/RC required parameter is not included in the MBMS Paging message in step 902, unlike in step 402 of FIG 4. As described above, the CU/RC required parameter is a parameter indicating whether the UEs receiving an MBMS Paging message will perform the Cell Update process or the RRC Connection Setup process. The second embodiment of the present invention enables the UEs to determine whether to perform the Cell Update process or the RRC Connection Setup process using an MBMS paging cause parameter in the MBMS Paging message, even without using the CU/RC required parameter.

The first embodiment of the present invention adds the MBMS paging cause to an MBMS Paging message to detect when a paging is an MBMS call. The second embodiment of the present invention defines MBMS Notification, MBMS Signaling Type 1, and MBMS Signaling Type 2, as an MBMS paging cause. An operation of UEs receiving the MBMS paging message including the MBMS paging cause will now be described herein below.

First, if an MBMS paging cause included in the MBMS Paging message indicates MBMS Notification, i.e., indicates that an MBMS service will be initiated soon, then the corresponding UEs must transmit an MBMS Paging Response message to the CN. Therefore, the UEs must perform a necessary operation such as the Cell Update process or the RRC Connection Setup process according to their states.

Second, if MBMS paging cause included in the MBMS Paging message indicates MBMS Signaling Type 1, i.e., indicates that an MBMS Control message for which a response message must be transmitted will be transmitted over FACH, then UEs must perform a necessary operation such as the Cell Update process or the RRC Connection Setup process.

Third, if MBMS paging cause included in the MBMS Paging message indicates MBMS Signaling Type 2, i.e., indicates that an MBMS Control message for which a response message is not required to be transmitted will be transmitted over FACH, then the UEs receive an MBMS Control message over the FACH without performing a separate operation such as the Cell Update process or the RRC Connection Setup process.

Referring to FIG 9, the RNC transmits PICH containing PI indicating paging to the UE at a time PI of the corresponding PO (Step 401), and transmits an MBMS Paging message to the UE over PCH after a lapse of a predetermined time (Step 902). The MBMS Paging message indicates whether the Cell Update/RRC Connection Setup process must be performed, with paging cause instead of the CU/RC required parameter described in step 402 of FIG 4. That is, the RNC controls the Cell Update process or the RRC Connection Setup process of UEs even without including the CU/RC required parameter, by uniquely setting the MBMS paging cause according to the type of the MBMS Control message to be transmitted. For example, if an MBMS Control message to be transmitted in association with the MBMS Paging message is a message that does not require a separate response message, the RNC sets MBMS paging cause to Signaling Type 2, and if an MBMS Control message to be transmitted in association with the MBMS Paging message is a message that requires a separate response message, the RNC sets MBMS paging cause to Signaling Type 1. In addition, if an MBMS Control message to be transmitted in association with the MBMS Paging message is a message indicating MBMS Notification, the RNC sets MBMS paging cause to Notification. The process of steps 403 to 407 is identical to the corresponding process of FIG 4, so a detailed description thereof will be omitted.

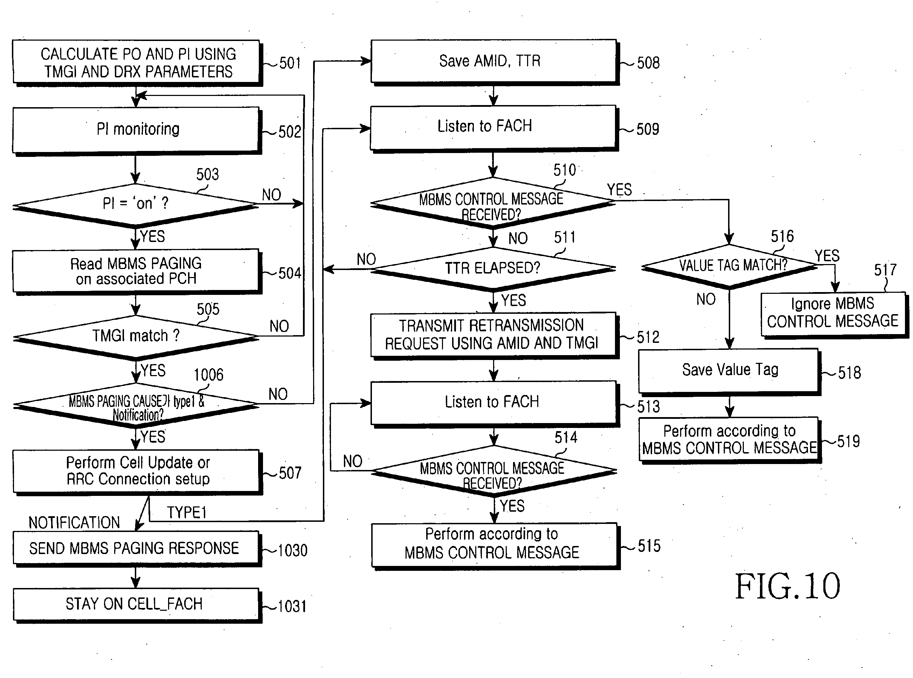

FIG 10 is a flowchart illustrating a process of receiving an MBMS Control message by a UE in an IDLE, CELL_PCH, or URA_PCH state. Before a description of FIG 10, it should be noted that the steps where the same operation as described in FIG 5 are performed are denoted by the same reference numerals. That is, a process of steps 501 to 504 of FIG. 10 is identical to a process of steps 501 to 504 of FIG 5, and steps 507 to 519 of FIG 10 are identical to steps 507 to 519 described in FIG 5. Referring to FIG 10, in step 1006, the UE determines whether MBMS paging cause of a received MBMS Paging message is one of MBMS Signaling Type 1 and MBMS Notification. If it is determined that MBMS paging cause of the received MBMS Paging message is one of MBMS Signaling Type 1 and MBMS Notification, the UE proceeds to step 507. In step 507, the UE performs the Cell Update process or the RRC Connection Setup process according to its current state, and if MBMS paging cause of the MBMS Paging message is MBMS Signaling Type 1, the UE proceeds to step 509. However, if MBMS paging cause of the MBMS Paging message is MBMS Notification, the UE proceeds to step 1030. In step 1030, the UE transmits an MBMS Paging Response message to the RNC in response to the received MBMS Paging message, and then proceeds to step 1031. In step 1031, the UE waits in the CELL_FACH state. The MBMS Paging Response message can include an ID of a UE that transmits the MBMS Paging Response message, and the RNC delivers the received MBMS Paging Response message to an SGSN. The SGSN then can detect a list of UEs desiring to receive an MBMS service for each RNC by receiving the MBMS Paging Response message.

If it is determined in step 1006 that MBMS paging cause of the received MBMS Paging message is neither MBMS Signaling Type 1 nor MBMS Notification, i.e., if MBMS paging cause of the received MBMS Paging message is MBMS Signaling Type 2, then the UE proceeds to step 508. The succeeding processes are identical to the processes described in FIG 5, so a detailed description thereof will be omitted.

A process of receiving the MBMS Control message by the UE in the IDLE, CELL_PCH, or URA_PCH state has been described above with reference to FIG 10. Because the second embodiment is identical to the first embodiment in a process of receiving the MBMS Control message by the UE in the CELL_FACH and CELL_DCH states, a detailed description thereof will be omitted.

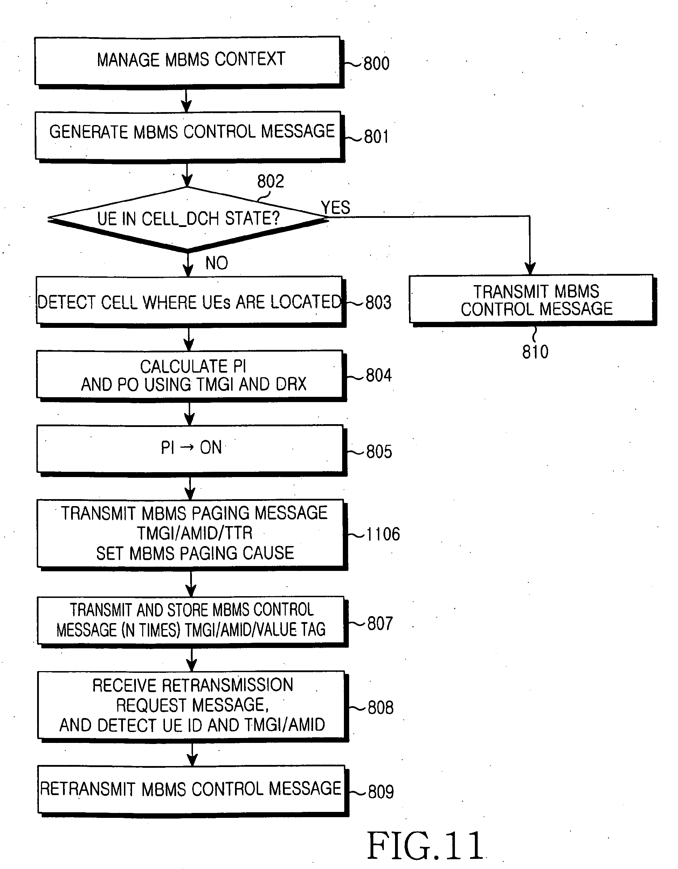

FIG 11 is a flowchart illustrating a process of transmitting an MBMS Control message by an RNC in FIG. 9. Before a description of FIG. 11, it should be noted that a process of steps 800 to 805 and steps 807 to 810 of FIG 11 is identical to the process of steps 800 to 805 and steps 807 to 810 of FIG 8. Referring to FIG 11, in step 1106, the RNC transmits an MBMS Paging message over PCH, a predetermined time after a PICH signal is transmitted, and then proceeds to step 807. The MBMS Paging message, as described above, includes such parameters as TMGI, AMID, TTR, and MBMS paging cause, and the MBMS paging cause is determined according to a characteristic of an MBMS Control message that will be transmitted in association with the MBMS Paging message. A process of steps 807 to 810 is identical to the corresponding process of FIG 8, so a detailed description thereof will be omitted.

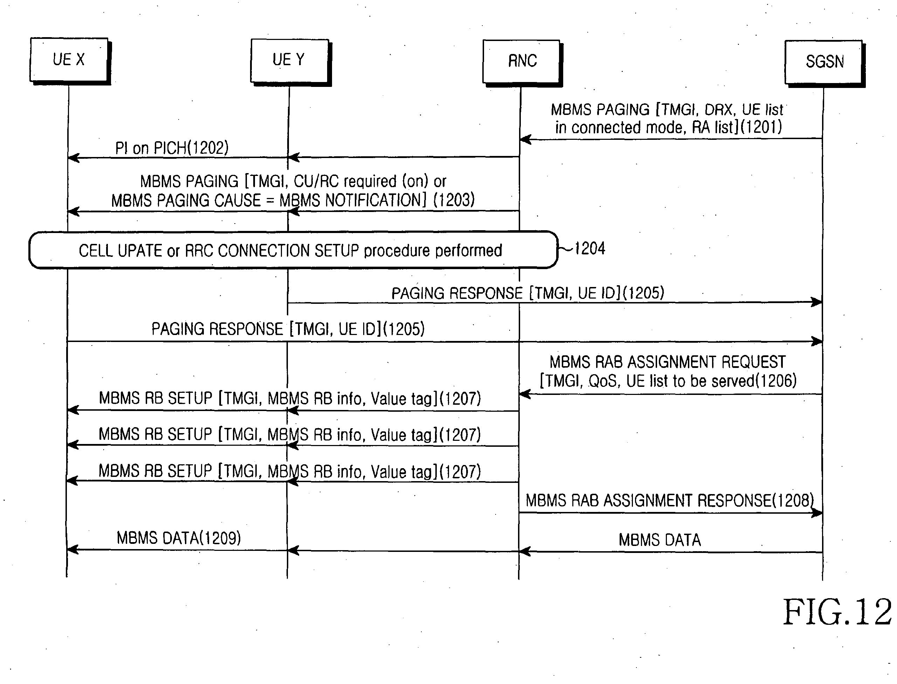

Next, detailed operations of SGSN, RNC, and UE according to the first and second embodiments of the present invention will be described with reference to FIGs. 12 to 14.

FIG 12 is signaling diagram illustrating a service Notification process and an MBMS RB Setup process when a UE X and a UE Y are in the same cell, according to the present invention. In describing FIG 12, it should be noted that all processes are applied in common to the first and second embodiments of the present invention unless they are separately specified. Referring to FIG. 12, an SGSN transmits an MBMS Paging message containing TMGI and DRX parameters, a UE list, and a RA (Routing Area) list, to an RNC (Step 1201). The RNC receives the MBMS Paging message from the SGSN, and determines cells to which it will transmit the MBMS Paging message by using the UE list and RA list in a connected mode. That is, because the RNC always recognizes the cells or URAs where UEs in the connected mode (i.e., UEs in the URA_PCH, CELL_PCH, CELL_FACH, or CELL_DCH state) are located, the RNC can determine the cells to which it must transmit the MBMS Paging message. In addition, because the URA is a set of cells, a list of UEs in the connected mode state is substituted for a set of cells. When the same cells are included in the set of cells, they are deleted with only one cell left, i.e., are deleted to prevent duplicates. The left cell, together with other different cells, become the cells that will receive the MBMS Paging message. In addition, the SGSN can deliver the RA list, which is a set of cells to the RNC, and the RA represents information on a position where UEs in the IDLE state are located after performing a service joining process. The SGSN tracks a position of the UEs in the IDEL state by the RA. Therefore, the RA list is also substituted for a set of cells to which the MBMS Paging message is to be transmitted, and the RNC deletes the same cells in the two kinds of cell sets (the cell set by the UE list in the connected mode and the cell set by the RA list), leaving only one cell. The RNC transmits an MBMS Paging message to UEs in the undeleted cells, i.e., a UE X and a UE Y (Steps 1202 and 1203). As stated above, the UE X and the UE Y are UEs in the same cell.

As described above, the first embodiment and the second embodiment are different in parameters included in the MBMS Paging message transmitted from the RNC to the UEs. It is assumed in FIG 12 that a CU/RC required parameter is turned "on" and MBMS paging cause is set to MBMS Notification (first embodiment), or MBMS paging cause is set to MBMS Notification (second embodiment). Upon receiving the MBMS Paging message, the UEs perform the Cell Update process or the RRC Connection Setup process (Step 1204). The reason for performing the Cell Update process or the RRC Connection Setup process is because the CU/RC required parameter is turned "on" and MBMS paging cause is set to MBMS Notification (first embodiment), or MBMS paging cause is set to MBMS Notification (second embodiment). Thereafter, the UE Y and the UE X each transmit an MBMS Paging Response message to the SGSN via the RNC (Step 1205). The MBMS Paging Response message includes TMGI and UE ID.

Upon receiving the MBMS Paging Response messages transmitted by the UE X and UE Y, the SGSN transmits an MBMS RAB Assignment Request message to the RNC to which the corresponding UEs belong (Step 1206). The MBMS RAB Assignment Request message includes TMGI, QoS information, and UE list to be served. The QoS information can be comprised of a required bandwidth, a permissible delay, and a permissible error rate for an MBMS service, and the RNC can determine an MBMS RB parameter that can satisfy the QoS. In addition, the UE list to be served can become a list of the RNC's UEs that transmitted the MBMS Paging Response message, and the RNC can determine the cells to which it must transmit an MBMS RB Setup message, using the information.

The RNC transmits an MBMS RB Setup message to the UE X and the UE Y a predetermined number of times using the MBMS RAB Assignment Request message transmitted by the SGSN (Step 1207). The MBMS RB Setup message includes TMGI, MBMS RB info, and value tag, and the MBMS RB info includes a parameter for a radio channel over which an MBMS service will be provided, a packet data convergence protocol (PDCP) parameter (header compression-related information), an RLC parameter (service data unit (SDU) discard information), a transport format combination set (TFCS), and channelization code information.

After receiving the MBMS RB Setup message the predetermined number of times, if the MBMS RB Setup message is normally received, the UE X and the UE Y set up a corresponding operation, i.e., a receiver, according to the MBMS RB info. Although the UE X and the UE Y repeatedly receive the MBMS RB Setup message the predetermined number of times, they perform an operation corresponding to the MBMS RB Setup message only once. When preparation for transmitting MBMS data between the RNC and the UE X and the UE Y is completed, the RNC transmits an MBMS RAB Assignment Response message to the SGSN (Step 1208). Upon receiving the MBMS RAB Assignment Response message, the SGSN transmits MBMS data to the corresponding RNC, and the RNC transmits the MBMS data to the corresponding UEs, i.e., UE X and UE Y (Step 1209).

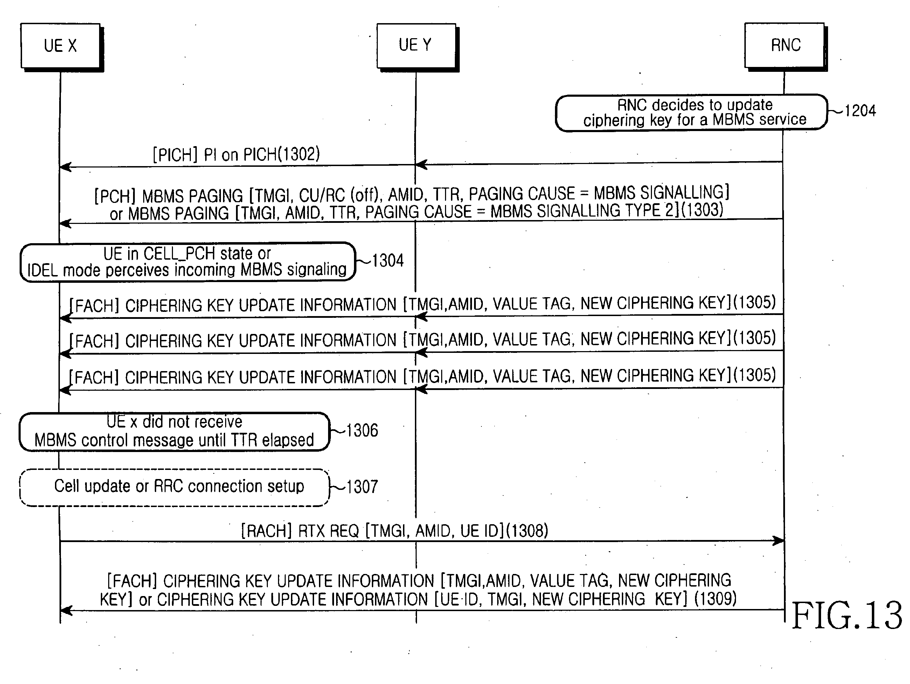

FIG 13 is a signaling diagram illustrating a process of updating a ciphering key when a UE X and a UE Y are in the same cell, according to an embodiment of the present invention. Before a description of FIG. 13, it is assumed that the ciphering key update process is performed through transmission of a Ciphering Key Update Information message and a separate response to the Ciphering Key Update Information message is not required. The use of a ciphering key provides a kind of an authentication process for preventing an unauthenticated UE, e.g., a UE that did not perform a service Joining process or a UE that requested an end of the MBMS service, from receiving the MBMS service. In addition, it will be assumed that the use of a ciphering key and the ciphering key update process are controlled by the RNC.

Referring to FIG 13, the RNC determines to update a ciphering key for a particular MBMS service (Step 1301). The ciphering key is updated by the RNC itself, for example, when the currently used ciphering key has been used for a predetermined time. The ciphering key is updated when an SGSN requested update of the ciphering key, for example, when a particular UE requested an end of the MBMS service, so the SGSN requested update of the ciphering key. The RNC then turns on PO and PI for a corresponding time to transmit PICH to the corresponding UEs, i.e., UE X and UE Y, in order to transmit the Ciphering Key Update Information message indicating the ciphering key update (Step 1302). Thereafter, the RNC transmits an MBMS Paging message to the UE X and the UE Y over PCH (Step 1303). As described above, the first embodiment and the second embodiment are different in parameters included in the MBMS Paging message, and it will be assumed in FIG 13 that a CU/RC required parameter is turned "off" and MBMS paging cause is set to MBMS Signaling (first embodiment), or MBMS paging cause is set to MBMS Signaling Type 2 (second embodiment).

UEs receiving the MBMS Paging message perform the following operation (1304). First, because CU/RC required parameter is turned "off" in the first embodiment, UEs receiving an MBMS Paging message based on the first embodiment store such parameters as TMGI, AMID, and TTR, and then start receiving data transmitted over FACH. The UEs do no perform the Cell Update process (UEs in the CELL_PCH and URA_PCH states) or the RRC Connection Setup process (UEs in the IDLE state). Next, because MBMS paging cause is set to MBMS Signaling Type 2 in the second embodiment, UEs receiving the MBMS Paging message based on the second embodiment store such parameters as TMGI, AMID, and TTR, and then start receiving data transmitted over FACH. The UEs do no perform the Cell Update process (UEs in the CELL_PCH and URA_PCH states) or the RRC Connection Setup process (UEs in the IDLE state).

Thereafter, the RNC repeatedly transmits the Ciphering Key Update Information message to the UE X and UE Y, a predetermined number of times (Step 1305). The Ciphering Key Update Information message includes TMGI, AMID, value tag, and new ciphering key. In some cases, the UE X may fail to receive the Ciphering Key Update Information message, although the RNC repeatedly transmitted the Ciphering Key Update Information message a predetermined number of times. That is, the UE X may fail to receive an MBMS Control message having the same TMGI and AMID as those of the MBMS Paging message until the TTR elapses (Step 1306). In this case, the UE X can perform the Cell Update process or the RRC Connection Setup process (Step 1307). As described above, the reason is because the Cell Update process or the RRC Connection Setup process is aimed at assigning unique identifiers U-RNTI and C-RNTI of a RAN to a particular UE and making an agreement on a transport format of an RRC message. If SRB 0 is used in steps 1308 and 1309 instead of the C-RNTI/U-RNTI, the step 1307 (Cell Update process or RRC Connection Setup process) is not required.

The UE X transmits a Retransmission Request message to the RNC over RACH using TMGI, AMID and UE ID (Step 1308). The C-RNTI/U-RNTI can be used as the UE ID, and if the C-RNTI/U-RNTI does not exist, IMSI (International Mobile Subscriber Identification) can be used as the UE ID. Upon receiving the Retransmission Request message from the UE X, the RNC determines a retransmission message using TMGI and AMID included in the Retransmission Request message, and retransmits the Ciphering Key Update Information message over FACH according to the determination result (Step 1309). When the Cell Update process or the RRC Connection Setup process is not performed in step 1307, the Ciphering Key Update Information message being retransmitted is also transmitted in the form of a group message. In contrast, when the Cell Update process or the RRC Connection Setup process is performed in step 1307, the Ciphering Key Update Information message being retransmitted is transmitted in the form of a dedicated message for the UE X.

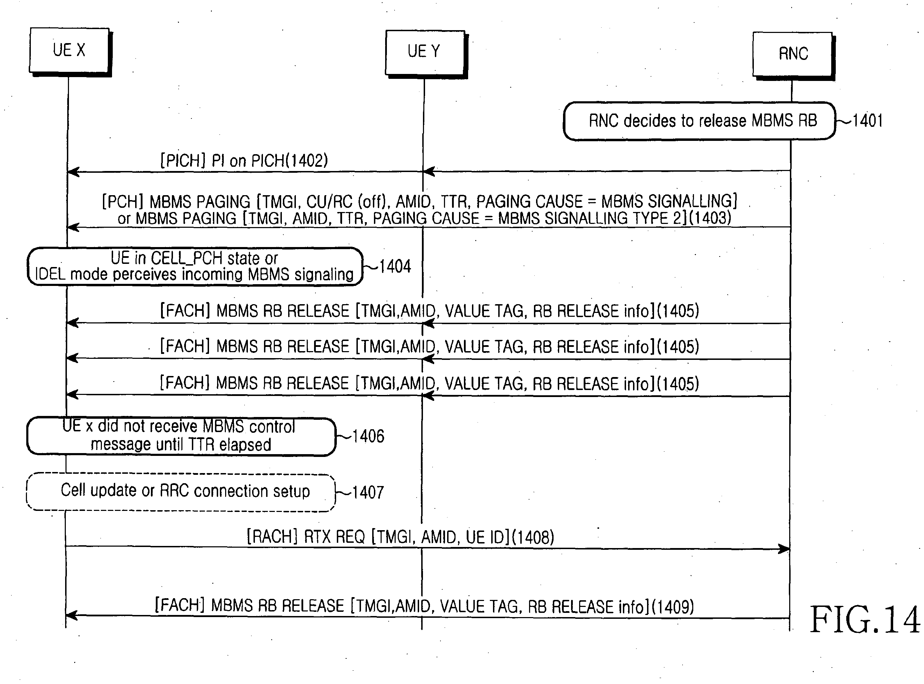

FIG 14 is a signaling diagram illustrating a process of releasing an MBMS RB when a UE X and a UE Y are in the same cell, according to the present invention. Before a description of FIG 14, it will be assumed that the MBMS RB is released through transmission of an MBMB RB Release message, and the MBMS RB Release message also does not require a separate response thereto. Referring to FIG 14, the RNC determines to release an MBMS RB for a particular MBMS service (Step 1401). Release of the MBMS RB is also determined by the RNC itself (for example, when no more radio resource is available for a particular cell), or when an SGSN requests release of the MBMS RB (for example, when MBMS service is ended). The RNC then turns on PO and PI for a corresponding time and transmits PICH to corresponding UEs, i.e., UE X and UE Y, in order to transmit an MBMS RB Release message indicating release of the MBMS RB (Step 1402). Thereafter, the RNC transmits an MBMS Paging message to the UE X and the UE Y over PCH (Step 1403). As described above, the first embodiment and the second embodiment are different in parameters included in the MBMS Paging message, and it will be assumed in FIG 14 that a CU/RC required parameter is turned "off" and MBMS paging cause is set to MBMS Signaling (first embodiment), or MBMS paging cause is set to MBMS Signaling Type 2 (second embodiment).

UEs receiving the MBMS Paging message perform the following operation (1404). First, because CU/RC required parameter is turned "off" in the first embodiment, UEs receiving an MBMS Paging message based on the first embodiment store such parameters as TMGI, AMID, and TTR, and then start receiving data transmitted over FACH. The UEs do no perform the Cell Update process (UEs in the CELL_PCH and URA_PCH states) or the RRC Connection Setup process (UEs in the IDLE state). Next, because the MBMS paging cause is set to MBMS Signaling Type 2 in the second embodiment, UEs receiving the MBMS Paging message based on the second embodiment store such parameters as TMGI, AMID, and TTR, and then start receiving data transmitted over FACH. The UEs do no perform the Cell Update process (UEs in the CELL_PCH and URA_PCH states) or the RRC Connection Setup process (UEs in the IDLE state).

Thereafter, the RNC repeatedly transmits an MBMS RB Release message to the UE X and UE Y, a predetermined number of times (Step 1405). The MBMS RB Release message includes TMGI, AMID, value tag, and RB Release info. In some cases, the UE X may fail to receive the MBMS RB Release message, although the RNC repeatedly transmitted the MBMS RB Release message a predetermined number of times. That is, the UE X may fail to receive an MBMS Control message having the same TMGI and AMID as those of the MBMS Paging message until the TTR elapses (Step 1406). In this case, the UE X can perform the Cell Update process or the RRC Connection Setup process (Step 1407). As described above, the reason is because the Cell Update process or the RRC Connection Setup process is aimed at assigning unique identifiers U-RNTI and C-RNTI of a RAN to a particular UE and making an agreement on a transport format of an RRC message. If SRB 0 is used in steps 1408 and 1409 instead of the C-RNTI/U-RNTI, the step 1407 (i.e., the Cell Update process or the RRC Connection Setup process) is not required.

The UE X transmits a Retransmission Request message to the RNC over RACH using TMGI, AMID and UE ID (Step 1408). The C-RNTI/U-RNTI can be used as the UE ID, and if the C-RNTI/U-RNTI does not exist, IMSI can be used as the UE ID. Upon receiving the Retransmission Request message from the UE X, the RNC determines a retransmission message using TMGI and AMID included in the Retransmission Request message, and retransmits the MBMS RB Release message over FACH according to the determination result (Step 1409). When the Cell Update process or the RRC Connection Setup process is not performed in step 1407, the MBMB RB Release message being retransmitted is also transmitted in the form of a group message. In contrast, when the Cell Update process or the RRC Connection Setup process is performed in step 1407, the MBMS RB Release message being retransmitted is transmitted in the form of a dedicated message for the UE X.

In providing an MBMS service, an area providing the MBMS service is divided into a tracking area and a non-tracking area. A third embodiment of the present invention provides a method for determining whether to perform the Cell Update/RRC Connection Setup process of UEs according to whether an area where UEs receiving the MBMS service is the tracking area or the non-tracking area.

The tracking area and the non-tracking area will be described in detail later. UEs located in a service area corresponding to the non-tracking area are controlled not to perform the Cell Update or RRC Connection Setup process even though they receive an MBMS Paging message (i.e., generally even when they must perform a Cell Update operation), so the UEs do not perform message transmission. By avoiding performing the message transmission due to the Cell Update or RRC Connection Setup process, congestion of uplink signals is prevented. The effects of removing congestion of uplink signals are maximized when many UEs are located in one cell, for example, when a large number of UEs exist in such a place as a sports stadium. That is, if 1000 UEs desire to receive a particular MBMS service in a particular service area, the service area is designated as a non-tracking area to prevent uplink signal transmission occurring due to the Cell Update or RRC Connection Setup process performed by the UEs in response to an MBMS Paging message received. The most important criterion in the third embodiment is how a UE determines whether a service area where it belongs is a tracking area or a non-tracking area.

First, a description will be made of a case where the UE determines whether a service area where it belongs is a tracking area or a non-tracking area by using system information block (SIB). That is, by including information indicating whether the cell is a tracking area or a non-tracking in a particular SIB broadcasted from a particular cell, UEs accessing the cell determine whether to perform a response operation when an MBMS service-related paging message or an MBMS Control message is received in the future. The method using the SIB has the following problem. If UEs in the CELL_PCH or CELL_FACH state move from a cell A in a tracking area to a cell B in a non-tracking area, an error may occur in managing mobility of UEs because a Cell Update message cannot be transmitted. In this case, because an RNC determines that the UE is still located in the cell A although it has moved from the cell A to the cell B, when such a process as incoming call paging must be performed on the UE, the RNC transmits a message for paging the UE to the cell A. The increasing inappropriate transmission of an RNC signal to the cell where the UE does not exist causes a management error.

Therefore, the third embodiment of the present invention uses a field over which a CU/RC required parameter in the MBMS Paging message is transmitted. As described above, the CU/RC required parameter is a parameter indicating whether to perform the Cell Update process or the RRC Connection Setup process upon receipt of an MBMS Paging message. As a result, because the CU/RC required parameter is identical in role to a parameter that must indicate whether to perform a response to an MBMS Control message according to the tracking area or the non-tracking area, the third embodiment of the present invention uses the CU/RC required parameter as a parameter indicating whether to perform a response operation according to the tracking area or the non-tracking area. Then, when an MBMS Control message is transmitted to a cell belonging to the non-tracking area, a CU/RC required parameter in an MBMS Paging message related to transmission of the MBMS Control message is set to "off" before being transmitted. Upon receiving the MBMS Paging message with the CU/RC required parameter set to "off," a UE does not perform a response process (Cell Update process or RCC Connection Setup process) in response to an MBMS Control message received in association with the MBMS Paging message. Therefore, the third embodiment is fundamentally identical to the first embodiment in an operation of receiving messages related to an MBMS service for the UEs, i.e., MBMS Paging message or MBMS Control message. In a process of exchanging an MBMS Control message in the form of a dedicated message with a UE, the third embodiment uses the same message transmission/reception method as the first embodiment. However, in a process of transmitting/receiving a group message-type MBMS Control message, the succeeding operations are determined according to a CU/RC required parameter value in the MBMS Paging message. By using the CU/RC required parameter in the MBMS Paging message in this manner, the UE normally performs the Cell Update or RRC Connection Setup process even though the UE fails to determine whether a service area where it belongs is a tracking area or a non-tracking area. Because the UE performs a response operation, i.e., Cell Update or RRC Connection Setup process, using a value of the CU/RC required parameter included in the MBMS Paging message, the RNC can accurately detect movement of the UE when it moves to a new cell, thereby preventing a mobility management error.

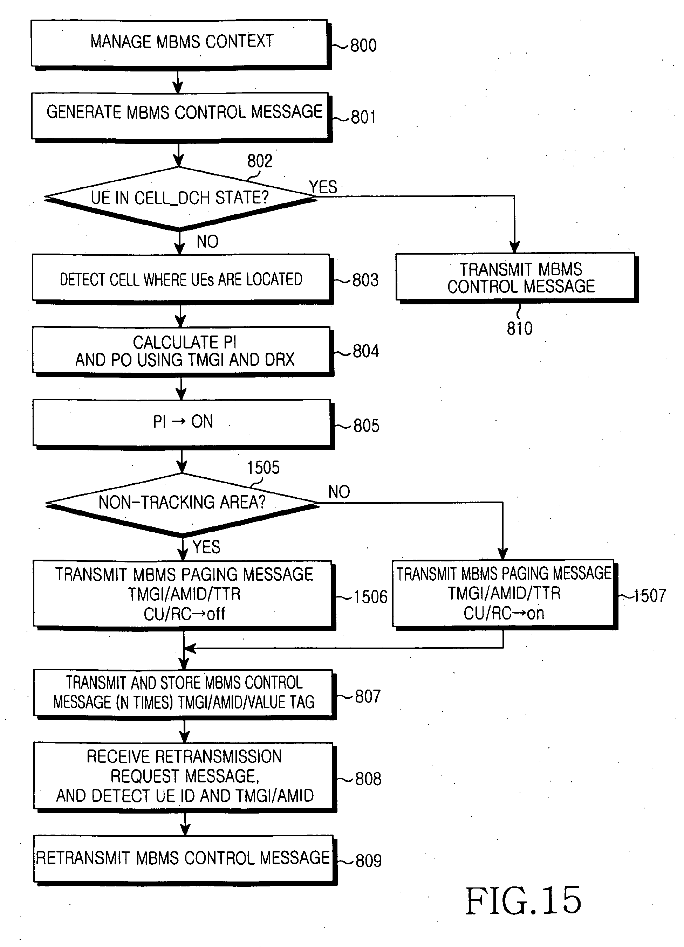

FIG 15 is a flowchart illustrating a process of transmitting an MBMS Control message by an RNC according to a third embodiment of the present invention. Before a description of FIG 15, it should be noted that the third embodiment is identical to the first embodiment in the UE's operation, but different from the first embodiment in the RNC's operation. In describing the RNC's operation according to the third embodiment with reference to FIG 15, the same operation as the RNC's operation according to the first embodiment will be denoted by the same reference numeral.

Referring to FIG 15, the RNC must always manage an MBMS context for a particular MBMS service provided in an area managed by the RNC itself, and the MBMS context includes the following information.
(1) TMGI
(2) DRX parameter
(3) UE list in CELL_DCH state
(4) UE list in CELL_FACH state
(5) UE list in CELL_PCH state
(6) UE list in URA_PCH state
(7) L1 info of each cell
   Information contained in L1 info of each cell includes channelization code and max power.
(8) characteristic of each cell

This is information indicating whether a service area in each cell is a tracking area or a non-tracing service area.

Although the MBMS context can include other information in addition to the above information, only the information needed in describing the third embodiment is listed herein. Unlike the first embodiment, the third embodiment must manage information indicating whether each cell is a tracking area or a non-tracking area. The reason is because, as described above, an operation of transmitting and receiving an MBMS Paging message and an MBMS Control message associated with the MBMS Paging message becomes different according to whether a cell where the UE belongs is a tracking area or a non-tracking area.

In addition, the UE lists managed in the MBMS context are updated using mobility-related messages that UEs transmit while moving between cells. For example, UEs in the CELL_PCH state, when changing their cell, transmit a Cell Update message to an RNC to notify that a cell where they belong was changed. The RNC receiving the Cell Update message recognizes that the UE that transmitted the Cell Update message has moved to a new cell.

The Cell Update message will now be described in brief. The UE transmits the Cell Update message to the RNC, when:
(1) a UE in the CELL_PCH state moves from a current cell to a new cell;
(2) a UE in the CELL_PCH or RRA_PCHS state received a Paging message; and
(3) synchronization is lost in a physical channel.

In the third embodiment of the present invention, the Cell Update message is transmitted considering the second case, i.e., when a corresponding UE received a Paging message.

Generally, it can be considered that all cells fundamentally belong to a tracking area. However, compared with a general cell, a cell where a very large number of users exist, e.g., a cell such as a large-scaled sports stadium, can be designated as a non-tracking area. In addition, the non-tracking area must be designated according to MBMS service. For example, a particular cell may be designated as a non-tracking area for one MBMS service and as a tracking area for another MBMS service. In addition, it is assumed that information indicating whether a corresponding cell is a tracking area or a non-tracking area is delivered from a BM-SC to an SGSN (service joining process), and thereafter, delivered from the SGSN to an RNC (service notification process). As described in step 1201 of FIG 12, a list of cells belonging to a non-tracking area and a list of cells belonging to a tracking area can be included in an MBMS Paging message, and accordingly, the RNC can determine a characteristic of each cell, i.e., can determine whether each cell is a tracking area or a non-tracking area, beginning at a time when it receives an MBMS Paging message from the SGSN.

Steps 800 to 805 of FIG 15 are identical in operation to steps 800 to 805 of FIG 8. In step 805, the RNC turns on PI of a corresponding PO to transmit a PICH signal, and then proceeds to step 1505. In step 1505, the RNC determines whether a cell where the UE belongs is a non-tracking area. If it is determined that a cell where the UE belongs is a non-tracking area, the RNC proceeds to step 1506. In step 1506, the RNC transmits an MBMS Paging message over PCH a predetermined time after it transmitted the PICH signal, and then proceeds to step 807. As described above, the MBMS Paging message includes such parameters as TMGI, AMID, TTR and CU/RC required. In addition, because a cell where the UE belong is a non-tracking cell, a response operation such as the Cell Update or RRC Connection Setup process is not required. Thus, the CU/RC required parameter is set to "off" before being transmitted. However, if it is determined in step 1505 that a cell where the UE belongs is not a non-tracking cell but a tracking cell, the RNC proceeds to step 1507. In step 1507, the RNC transmits an MBMS Paging message over PCH a predetermined time after it transmitted the PICH signal, and then proceeds to step 807. As described above, the MBMS Paging message includes such parameters as TMGI, AMID, TTR, and CU/RC required. In addition, because a cell where the UE belong is a tracking cell, a response operation such as the Cell Update or RRC Connection Setup process must be required. Thus, the CU/RC required parameter is set to "on" before being transmitted. Steps 807 to 810 of FIG 15 are identical in operation to steps 807 to 810 of FIG 8.

While the present invention has been shown and described with reference to certain preferred embodiments thereof, it will be understood by those skilled in the art that various changes in form and details may be made therein without departing from the spirit and scope of the invention as defined by the appended claims.

## Claims

1. A method for transmitting control information for a multimedia broadcast/multicast service (MBMS) by a radio network controller (RNC) in a mobile communication system including a user equipment (UE) and the RNC for providing the MBMS to the UE, the method comprising the steps of:
if a control message for the MBMS to be transmitted to the UE is generated, generating operation instruction information for the UE instructing whether to respond to a paging message; and
transmitting the paging message including the operation instruction information to the UE before transmission of the control message.

2. The method of claim 1, wherein the operation instruction information includes state transition instruction information representing whether to respond to the paging message for the UE.

3. The method of claim 1, wherein the operation instruction information includes a generation cause of the paging message.

4. The method of claim 1 wherein the control message is transmitted on a common channel.

5. The method of claim 4, wherein the control message is repeatedly transmitted a predetermined number of times using the identical identifier.

6. A method of receiving control information for a multimedia broadcast/multicast service (MBMS) by a user equipment (UE) in a mobile communication system including the UE and a radio network controller (RNC) for providing the MBMS to the UE, the method comprising the steps of:
determining whether to respond to a paging message by using operation instruction information for instructing whether to respond to the paging message; and
transmitting response information to the RNC according to the operation instruction information included in the paging message.

7. The method of claim 6, wherein the operation instruction information includes state transition instruction information representing whether to respond to the paging message for the UE.

8. The method of claim 6, wherein the operation instruction information includes a generation cause of the paging message.

9. A method for transmitting control information for a multimedia broadcast/multicast service (MBMS) by a radio network controller (RNC) in a mobile communication system including a user equipment (UE) and the RNC providing the MBMS to the UE, the method comprising the steps of:
if a control message to be transmitted to UEs requesting the MBMS service is generated, transmitting to the UEs a paging message including operation instruction information instructing operation of the UEs according to a characteristic of an area where the UEs receive the MBMS service; and
transmitting the control message to the UE after transmission of the paging message including operation instruction information.

10. The method of claim 9, wherein the operation instruction information includes information instructing whether to perform state transition of the UEs when the paging message is received.

11. The method of claim 9, wherein the characteristic of the area where the MBMS service is provided is a non-tracking area where one of a cell update and a radio resource control (RRC) connection setup of the UEs is not performed, and is a tracking area where one of a cell update and an RRC connection setup of the UEs is performed.

12. The method of claim 9, wherein the characteristic of the area where the MBMS service is provided is determined according to MBMS service type.

13. The method of claim 9, wherein the characteristic of the area where the MBMS service is provided is determined according to a number of the UEs requesting the MBMS service.

14. The method of claim 9, wherein each of the UEs receives the paging message, and determines whether to perform one of a cell update and an RRC connection setup according to the operation instruction information included in the received paging information.
